# EUROPEAN PATENT APPLICATION

(11) **EP 2 755 096 A1**
(43) Date of publication of application: **16.07.2014**
(21) Application number: 12829784.3
(22) Date of filing: 04.09.2012
(51) Int. Cl.: G05B 19/418, G06Q 50/04

(54) **WORK MANAGEMENT SYSTEM, WORK MANAGEMENT TERMINAL, PROGRAM AND WORK MANAGEMENT METHOD**

(30) Priority: 05.09.2011 JP 2011192647
(71) Applicant: Kobayashi Manufacture Co., Ltd., Ishikawa 920-0355 (JP)
(72) Inventor: KOBAYASHI, Yasunori, Kanazawa-shi Ishikawa 920-0355 (JP)
(74) Representative: Stebbing, Timothy Charles
(86) International application number: PCT/JP2012/072444
(87) International publication number: WO 2013/035687

(57) **Abstract**

Imaging device 1 and terminal device 2 are provided for each of plural work areas 100. Image data sets, capturing time data sets, and imaging unit identifiers transmitted by imaging device 1 are stored in association with each other in image database DB1. Control unit 21 of terminal device 5 displays progress display area of each work process performed for producing a product in a predetermined layout on display unit 25, and controls display unit 25 to display progress in each progress display area in accordance with contents stored in progress database DB6. In addition, control unit 21 of terminal device 5 specifies a progress display area displayed on display unit 25 in accordance with a data set supplied from input unit 24, specifies image data sets corresponding to the specified progress display area by referring to the contents stored in progress database DB6 and correspondence database DB7, reads the specified image data sets from image database, and controls display unit 25 to display images represented by the image data sets.

## Description

### Technical Field

The present invention relates to a technique for managing work processes.

### Background Art

Several systems for managing work processes for producing products have been proposed. For example, in Document 1 a system is proposed in which a chart is displayed showing items to be managed in a tree form, and a screen is displayed for confirmation and/or change of information on an item selected by a user from among the items shown in the tree form in the chart. According to the system proposed in Document 1, the user can easily understand a current status or result of work processes to be managed. In Document 2 a system is proposed for managing work processes for producing substrate-treatment devices. The system proposed in Document 2 takes images of a workspace for producing a substrate-treatment device, stores image data sets of the images, which may be either still images or moving images, in a server device, and delivers the image data sets to an orderer of the substrate-treatment device in response to a request from the orderer.

### Prior Art Document

### Patent Document

Patent Document 1: JP2000-326184A
Patent Document 2: JP2007-233832A

### Summary of the Invention

### Problem to be solved by the Invention

In a case where one company produces many kinds of products, it is difficult for most staff members of the company to be familiar with information on all of the products. Therefore, when the company receives an inquiry concerning a certain product from a customer, it may be that only those managerial staff members who are familiar with information on all of the products are able to reply to the inquiry.

Accordingly, an object of the present invention is to provide a technique to facilitate quick understanding of information on work processes.

### Means for Solving the Problem

A work process management system according to an embodiment of the present invention comprises: one or more transmission units each of which is provided for each of one or more work areas, transmits image data sets representing images of a work area captured by one or more imaging units, in association with capturing time data sets indicating capturing times of the images and imaging unit identifiers identifying the imaging units by which the images are captured, accepts an input of a work process data set including a work process identifier identifying a work process and a time data set indicating at least one of a starting time and a completion time of the work process, and transmits the work process data set; an image storage unit that stores the image data sets in association with the capturing time data sets indicating capturing times and the imaging unit identifiers identifying the imaging units, which are transmitted by each of the one or more transmission units; a first storage unit that stores data sets indicating correspondence relationships between work processes and imaging unit identifiers; a second storage unit that stores, when the input of the work process data set of each of one or more work processes is accepted, a progress data set in accordance with the work process data set, the progress data set including the time data set indicating at least one of a starting time and a completion time of the work process; a first control unit that controls a display device to display progress of the one or more work processes in one or more progress display areas in a predetermined layout, and controls the display device to update the display in the one or more progress display areas in accordance with contents stored in the second storage unit; a specifying unit that specifies a progress display area from among the one or more progress display areas displayed by the display device; and a second control unit that specifies one or more image data sets corresponding to the progress display area specified by the specifying unit by referring to contents stored in the second storage unit and in the first storage unit, retrieves the specified image data sets from an image database stored by the image storage unit, and displays images represented by the retrieved image data sets.

A work management terminal according to an embodiment of the present invention comprises: a first storage unit that stores data sets indicating correspondence relationships between work processes and imaging unit identifiers identifying imaging units, the imaging units capturing images of work areas; a second storage unit that accepts an input of a work process data set of each of one or more work processes from one or more transmission units, and stores the work process data set, each of the one or more transmission units being provided for each of one or more work areas, transmitting image data sets representing images captured by one of the imaging units, in association with capturing time data sets indicating capturing times of the images and imaging unit identifiers identifying the imaging units by which the images are captured, accepting an input of work process data set, and transmitting the work process data set, the work process data set including a work process identifier identifying a work process and a time data set indicating at least one of a starting time and a completion time of the work process; a first control unit that controls a display device to display progress of the one or more work processes in one or more progress display areas in a predetermined layout, and controls the display device to update the display of the one or more progress display areas in accordance with contents stored in the second storage unit; a specifying unit that specifies a progress display area from among the one or more progress display areas displayed by the display device; and a second control unit that specifies one or more image data sets corresponding to the progress display area specified by the specifying unit by referring to contents stored in the second storage unit and in the first storage unit, retrieves the specified image data sets from an image database stored by an image storage unit, and controls the display device to display images represented by the image data sets, the image storage unit storing the image data sets in association with the capturing time data sets indicating capturing times and the imaging unit identifiers identifying the imaging units, which are transmitted by the one or more transmission units.

In a preferred embodiment, the second control unit retrieves from the image database plural image data sets representing images whose capturing times are successive in time series, and controls the display device to display images represented by the plural image data sets in plural display areas sequentially in time series based on the capturing time of the image data sets, so that starting times of displays of the images in the plural display areas are different from one another.

A program, according to an embodiment of the present invention, causes a computer to execute: a first storage step of storing data sets indicating correspondence relationships between work processes and imaging unit identifiers identifying imaging units, the imaging units capturing images of work areas; a second storage step of accepting an input of a work process data set of each of one or more work processes from one or more transmission units, and storing the work process data set, each of the one or more transmission units being provided for each of one or more work areas, transmitting image data sets representing images captured by one of the imaging units, in association with capturing time data sets indicating capturing times of the images and imaging unit identifiers identifying the imaging units by which the images are captured, accepting an input of work process data set, and transmitting the work process data set, the work process data set including a work process identifier identifying a work process and a time data set indicating at least one of a starting time and a completion time of the work process; a first control step of controlling a display device to display progress of the one or more work processes in one or more progress display areas in a predetermined layout, and controlling the display device to update the display of the one or more progress display areas in accordance with contents stored in the second storage unit; a specifying step of specifying a progress display area from among the one or more progress display areas displayed by the display device; and a second control step of specifying one or more image data sets corresponding to the progress display area specified in the specifying step by referring to contents stored in the second storage unit and in the first storage unit, retrieving the specified image data sets from an image database stored by an image storage unit, and controlling the display device to display images represented by the image data sets, the image storage unit storing the image data sets in association with the capturing time data sets indicating capturing times and the imaging unit identifiers identifying the imaging units, which are transmitted by the one or more transmission units.

According to a preferred embodiment, the program causes the computer, in the second control step, to retrieve from the image database plural image data sets representing images whose capturing times are successive in time series, and to control the display device to display images represented by the plural image data sets in plural display areas sequentially in time series based on the capturing time of the image data sets, so that starting times of displays of the images in the plural display areas are different from one another.

A work process management system according to an embodiment of the present invention comprises: one or more image transmission units each of which is provided for each of one or more work areas, and each of which transmits image data sets representing images of a work area captured by one or more imaging units, in association with capturing time data sets indicating capturing times of the images and imaging unit identifiers identifying the imaging units by which the images are captured; an image storage unit that stores the image data sets in association with the capturing time data sets indicating capturing times and the imaging unit identifiers identifying the imaging units, which are transmitted by each of the one or more image transmission units; one or more work process information transmission units each of which accepts an input of a work process data set including a work process identifier identifying a work process and a time data set indicating at least one of a starting time and a completion time of the work process, and transmits the work process data set; and a storage unit that stores, when the input of the work process data set of each of one or more work processes is accepted, a progress data set in accordance with the work process data set, the progress data set including the time data set indicating at least one of a starting time and a completion time of the work process.

### Effects of the Invention

According to the present invention, a user of a work process management system can easily understand information on work processes.

### Brief Description of the Drawings

Fig. 1 is a block diagram showing an example of a configuration of a system.
Fig. 2 is a block diagram showing an example of a hardware configuration of image transmission device 1.
Fig. 3A is a block diagram showing an example of a hardware configuration of terminal device 2.
Fig. 3B is a block diagram showing an example of a hardware configuration of terminal device 5.
Fig. 4 is a block diagram showing an example of a hardware configuration of image database device 3.
Fig. 5 is a block diagram showing an example of a hardware configuration of production management database device 4.
Fig. 6 is a diagram showing examples of contents of progress database DB6.
Fig. 7 is a diagram showing examples of contents of correspondence database DB7.
Fig. 8 is a block diagram showing an example of a functional configuration of image transmission device 1.
Fig. 9A is a block diagram showing an example of a functional configuration of terminal device 2.
Fig. 9B is a block diagram showing an example of a functional configuration of terminal device 5.
Fig. 10 is a block diagram showing an example of a functional configuration of image database device 3.
Fig. 11 is a block diagram showing an example of a functional configuration of production management database device 4.
Fig. 12 is a diagram showing an example of a list of barcodes placed in a work area.
Fig. 13 is a diagram showing an example of a screen displayed by a display unit of terminal device 2.
Fig. 14 is a diagram showing an example of a screen displayed by a display unit of terminal device 5.
Fig. 15 is a diagram showing an example of a screen displayed by a display unit of terminal device 5.
Fig. 16 is a block diagram showing an example of a configuration of a system.
Fig. 17 is a block diagram showing an example of a functional configuration of terminal device 2.
Fig. 18 is a diagram showing an example of a screen displayed by a display unit of terminal device 2.
Fig. 19 is a diagram showing an example of a screen displayed by a display unit of terminal device 6.
Fig. 20 is a chart showing progress statuses of work processes.
Fig. 21 is a diagram showing an example of a drawing of a completed product.
Fig. 22 is a diagram showing an example of a screen displayed by a display unit of terminal device 5.
Fig. 23 is a block diagram showing an example of a configuration of a system.
Fig. 24 is a diagram showing an example of a screen displayed by a display unit of terminal device 5.
Fig. 25 is a diagram for explaining display timings of images.
Fig. 26 is a diagram for explaining display timings of images.

### Description of Reference Numerals

- 100: Work area
- 200: Communication network
- 1: Imaging device
- 2, 5, 6: Terminal device
- 3: Image database device
- 4: Production management database device
- 8: Database
- 11, 21, 31, 41: Control unit
- 12, 22, 32, 42: Storage unit
- 13, 23, 33, 43: Communication unit
- 14, 34, 44: Operation unit
- 15: Imaging device
- 24: Input unit
- 25, 35, 45: Display unit
- 111: Image transmission unit
- 211: Work process information transmission unit
- 212: Image receiving unit
- 213: Display control unit
- 215: First control unit
- 216: Specifying unit
- 217: Second control unit
- 218: Calculation unit
- 219: Multiplication unit
- 220: Estimation unit
- 231: Work process information transmission unit
- 311: Image receiving unit
- 313: Image reading unit
- 411: Work process information receiving unit
- 412: Work process information storage unit
- 413: Search information receiving unit
- 241: Barcode reader

Embodiments for carrying out the invention

A: First Embodiment
A-1: Configuration
A-1-1: System Configuration

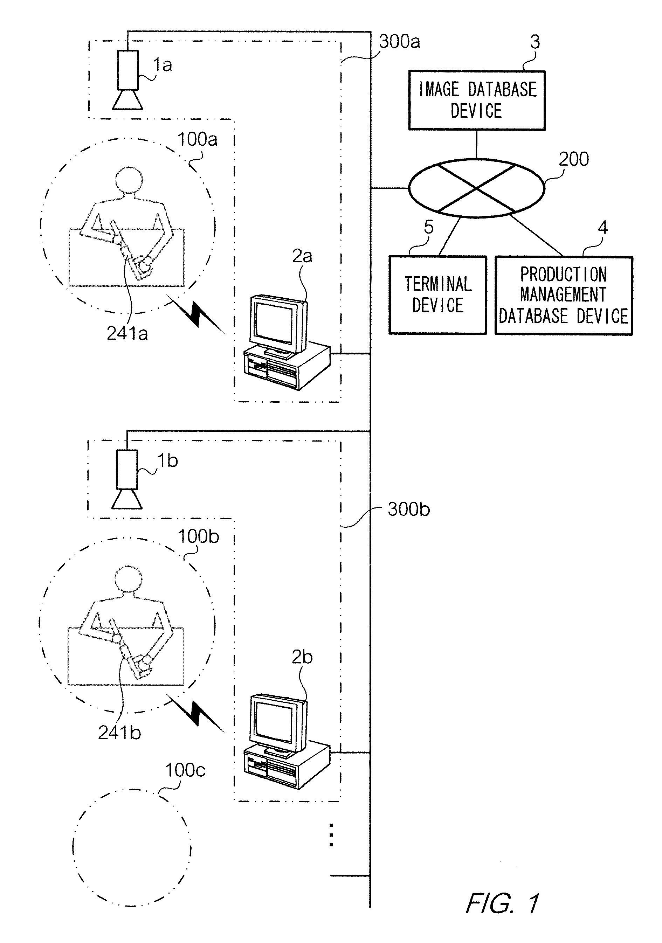

An exemplary embodiment of a work process management system according to the present invention used in a factory for performing sheet metal processing will now be described with reference to Fig. 1. As shown in Fig. 1, plural work areas 100a, 100b, ... are provided in the factory. Work areas 100a, 100b, ... are work areas for performing sheet metal processing of products. Imaging device 1a and terminal device 2a are provided in work area 100a, and imaging device 1b and terminal device 2b are provided in work area 100b. Imaging device 1a and 1b are imaging devices that capture images of work areas and output image data sets representing the images, which may be either still images or moving images. According to the present embodiment, imaging devices 1a and 1b capture images of work areas at certain intervals (e.g., every one minute), and output image data sets representing the images as still images.

Terminal devices 2a and 2b are computer devices such as personal computers, which execute various kinds of data processing in response to operations made by users. Some work areas other than work areas 100a and 100b may be provided in the factory, and configurations of devices provided in these work areas are the same as configurations of devices provided in work areas 100a and 100b. In the following description, each of work areas 100a, 100b, ... is called "work area 100" when it is not necessary to distinguish them. Similarly, each of imaging devices 1a, 1b, ... is called "imaging device 1" when it is not necessary to distinguish them, and each of terminal devices 2a, 2b, ... is called "terminal device 2" when it is not necessary to distinguish them. As shown in Fig.1, imaging device 1a and terminal device 2a configure image transmission unit 300a, and imaging device 1b and terminal device 2b configure image transmission unit 300b. Each of image transmission unit 300a and 300b is called "image transmission unit 300" when it is not necessary to distinguish them. Image transmission unit 300 is an example of a transmission unit of the present invention. A number of image transmission devices 1 provided in each work area 100 is not limited to one, and plural imaging devices 1 may be provided in each work area 100. In the present embodiment, each product is produced through one or more work processes. Work processes to be performed in each work area 100 are predetermined. In other words, in the present embodiment, each of work areas 100 has its own set of work processes. Terminal device 5 shown in Fig. 1 is a terminal device used by a manager to understand various kinds of information on work processes such as progress status. Terminal device 5 is provided out of work area 100.

Image database device 3 is, for example, a general-purpose server computer, and stores image data sets output from imaging devices 1. Production management database device 4 is, for example, a general-purpose server computer, and executes various kinds of data processing for work process management. As shown in Fig. 1, the work process management system includes plural image transmission units 300, each of which is provided in each of work areas 100, image database device 3, production management database device 4, and terminal device 5. These devices are connected to communication network 200 such as a LAN (Local Area Network) or the Internet.

### A-1-2: Configuration of Imaging Device 1

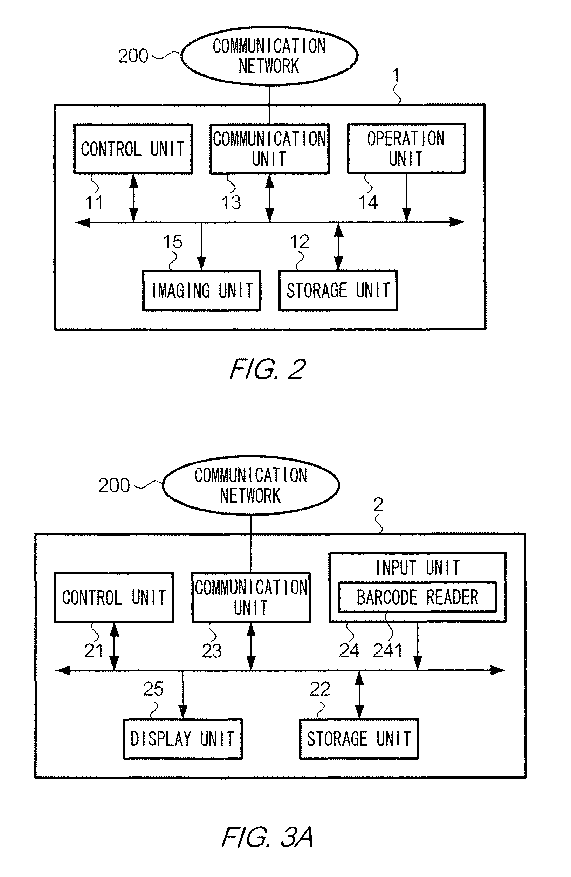

Fig. 2 is a block diagram showing an example of a hardware configuration of imaging device 1. As shown in the figure, control unit 11 has CPU (Central Processing Unit), ROM (Read Only Memory) and RAM (Random Access Memory), and controls imaging device 1 in accordance with programs stored in ROM or storage unit 12. Storage unit 12 is, for example, EEPROM (Electronically Erasable and Programmable ROM), and stores various kinds of programs such as a program for controlling imaging device 1. Communication unit 13 communicates with other devices via communication network 200. Communication unit 13 may communicate with other devices via either wired connection or wireless connection. Operation unit 14 has several operation elements such as a button for switching on and off of power supply, and outputs data sets corresponding to operations made by a user to the operation elements. Imaging unit 15 is a device that captures images of a certain portion of work area 100 and outputs image data sets representing the images. Control unit 11 transmits image data sets representing images captured by imaging unit 15, together with capturing time data sets each of which indicates a capturing time of the image and an imaging unit identifier identifying imaging device 15 that captured the image, via communication unit 13 to image database device 3. For example, when still images are captured every one second, capturing time data sets indicating capturing times incremented by one second from one image to another image are given to image data sets. When images captured by imaging unit 15 are moving images, capturing time data sets are embedded in a data set containing the image data sets representing a moving image at certain intervals determined in accordance with a data format of the data set. In the example shown in Fig. 2, imaging unit 15 is provided in imaging device 1. However, imaging unit 15 may not be provided in imaging device 1, and an external imaging device functioning as imaging unit 15 may be used instead of imaging unit 15 provided in imaging device 1. In such a case, imaging device 1 may be provided with an input terminal, and imaging unit 15 may be connected to the input terminal of imaging device 1.

### A-1-3: Configuration of Terminal Device 2

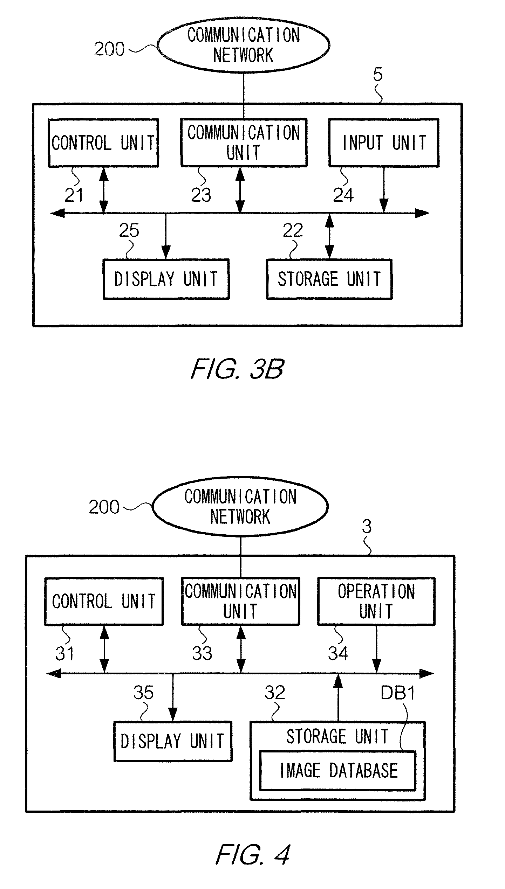

Fig. 3A is a block diagram showing an example of a hardware configuration of terminal device 2, and Fig. 3B is a block diagram showing an example of a hardware configuration of terminal device 5. In the figures, the same reference numerals are used for components that terminal device 2 and terminal device 5 commonly have. In the figures, control unit 21 has CPU, ROM, and RAM, and controls terminal device 2 (or terminal device 5) in accordance with programs stored in ROM or storage unit 22. Storage unit 22 is a storage device such as a hard disk, and stores various kinds of programs such as a program for controlling terminal device 2 (or terminal device 5). Communication unit 23 communicates with external devices via communication network 200 via either wired connection or wireless connection.

Input unit 24 is an input device having operation elements such as a keyboard and/or a mouse, and outputs data sets corresponding to operations made by a user to the operation elements. Input unit 24 of terminal device 2 has barcode reader 241 that reads barcodes and outputs data sets indicating the barcodes. In the present embodiment, barcode reader 241 reads barcodes indicating various kinds of information such as a product identifier identifying a product, a work process identifier identifying a work process of the product, and a worker identifier identifying a worker performing the work process. Display unit 25 is a display device such as a liquid crystal display, and displays various kinds of images under the control of control unit 21. Display unit 25 is an example of a display device according to the present invention. It is to be noted that, in the example shown in Fig. 3, input unit 24 and display unit 25 are provided in terminal device 2. However, input unit 24 and display unit 25 may not be provided in terminal device 2, and an external display device functioning as display unit 25 and/or an external input device functioning as input unit 24 may be connected to the terminal devices. In the case, terminal device 2 (or terminal device 5) may be provided with an output terminal and/or an input terminal, and display unit 25 and/or input unit 24 may be connected to the output terminal and/or the input terminal of terminal device 2 (or terminal device 5).

### A-1-4: Configuration of Image Database Device 3

Fig. 4 is a block diagram showing an example of a hardware configuration of image database device 3. As shown in the figure, control unit 31 has CPU, ROM, and RAM, and controls image database device 3 in accordance with programs stored in ROM or storage unit 32. Storage unit 32 is a storage device such as a hard disk, and stores various kinds of programs such as a program for controlling image database device 3. Communication unit 33 communicates with imaging device 1, terminal device 2, and terminal device 5 via communication network 200. Communication unit 33 may communicate with other devices via either wired connection or wireless connection.

Storage unit 32 stores image database DB1 was shown in the figure. Image database DB1 stores image data sets transmitted from imaging device 1. Control unit 31 receives, via communication unit 33, image data sets together with capturing time data sets indicating capturing times of the images and imaging unit identifiers from imaging device 1, and stores the image data sets, capturing time data sets and imaging unit identifiers in image database DB1 in association with each other.

### A-1-5: Configuration of Production Management Database Device 4

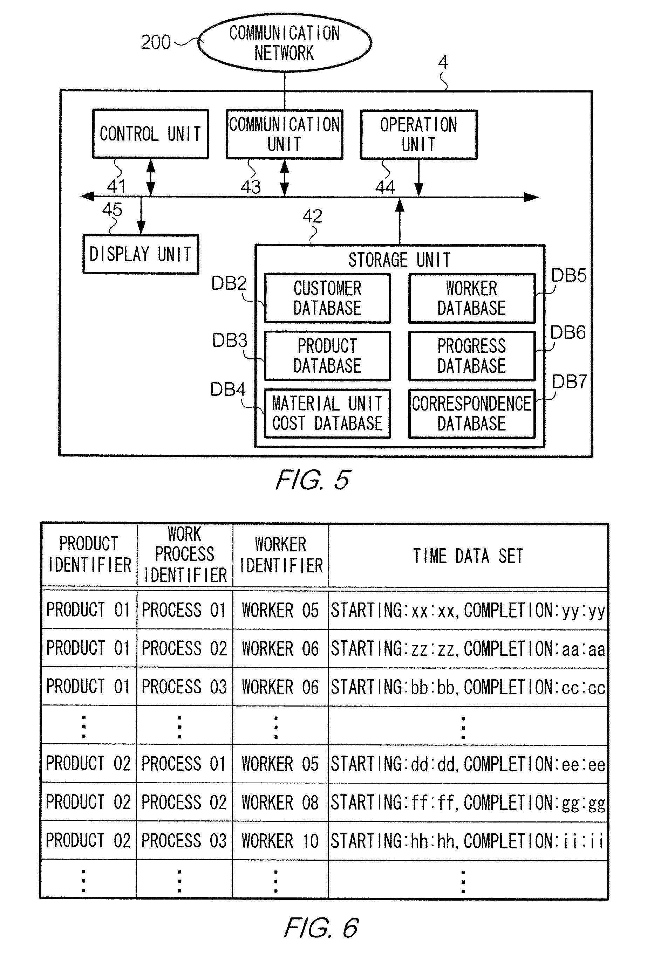

Fig. 5 is a block diagram showing an example of a hardware configuration of production management database device 4. As shown in the figure, control unit 41 has CPU, ROM, and RAM, and controls production management database device 4 in accordance with programs stored in ROM or storage unit 42. Storage unit 42 is a storage device such as a hard disk, and stores various kinds of programs such as a program for controlling production management database device 4. Communication unit 43 communicates with other devices via either wired connection or wireless connection.

Storage unit 42 stores customer database DB2, product database DB3, material unit cost database DB4, worker database DB5, progress database DB6, and correspondence database DB7 as shown in the figure. Customer database DB2 stores data sets indicating information on customers such as names and/or contact information of customers (hereinafter, called "customer data sets"). Product database DB3 stores data sets each of which indicates information on a product such as a product identifier identifying the product, a three-dimensional figure of the product, and a design diagram of the product. Material unit cost database DB4 stores data sets indicating unit costs of materials for producing products. Worker database DB5 stores data sets indicating information on workers such as worker identifiers identifying workers and their names.

Progress database DB6 stores data sets indicating information on progress of work processes. According to this embodiment, the progress of work processes is specified by starting times and completion times of work processes indicated by data sets transmitted from terminal device 2. Fig. 6 is a diagram showing examples of contents of data sets stored in progress database DB6. As shown in the figure, this database has data fields "product identifier," "work process identifier," "worker identifier," and "time information." Data field "product identifier" stores product identifiers identifying products. Data field "work process identifier" stores work process identifiers identifying work processes of the products. Data field "worker identifier" stores worker identifiers identifying workers performing the work processes. Data field "time information" stores time data sets indicating starting times and completion times of the work processes. The examples of data sets shown in Fig. 6 indicate that a product identified by a product identifier "product 01" is produced through work processes identified as "process 01," 'process 02," "process 03," etc. The examples further indicate that the work process of "process 01" was performed by a worker identified as "worker 05", and work processes identified as "process 02" and "process 03" were performed by a worker identified as "worker 06". In the same way, the examples indicate that a product identified as "product 02" is produced through a work process identified as "process 01" performed by a worker identified as "worker 05", a work process identified as "process 02" performed by a worker identified as "worker 08", and a work process identified as "process 03" performed by a worker identified as "worker 10". It is to be noted that Fig. 6 shows examples of data sets stored in progress database DB6. Namely, data sets stored in progress database DB6 are not limited to data sets shown in Fig. 6, and progress database DB6 may store data sets indicating various contents.

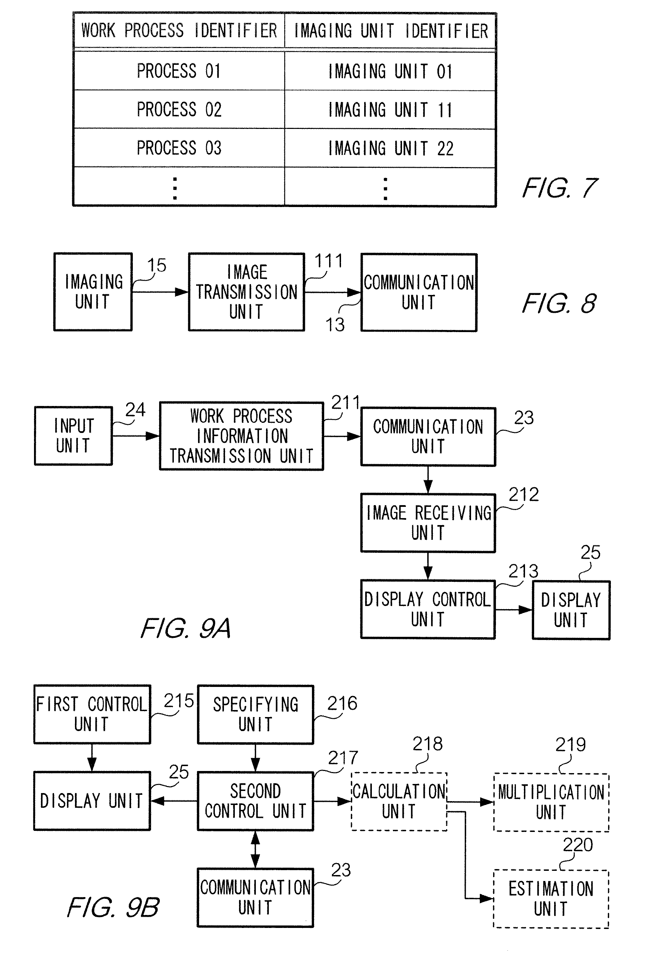

Correspondence database DB7 stores data sets indicating correspondences between work areas and/or work processes, and imaging unit identifiers. Fig. 7 shows examples of contents of data sets stored in correspondence database DB7. As shown in Fig. 7, this database has data fields "imaging identifier" and "work process identifier." Data field "imaging identifier" stores imaging device identifiers identifying imaging units 15. Data field "work process identifier" stores work process identifiers identifying work processes. In the present embodiment, work processes to be performed in each of work areas 100 are predetermined. In other words, in the present embodiment, one work process is performed in only one work area 100, and when a work process is identified, a work area where the work process is performed is also identified. It is to be noted that, in a case where one work process may be performed in plural work areas 100, a table indicating correspondences between work processes and work areas 100 where the work processes are performed may be prepared, and one or more work areas 100 where a work process may be performed may be specified by the table.

### A-1-6: Functional Configuration of Devices

Functional configurations of devices will now be described with reference to figures. Fig. 8 is a diagram showing an example of a functional configuration of imaging device 1. Control unit 11 of imaging device 1 executes computer programs read from ROM or storage unit 12 to realize image transmission unit 111 shown in the figure. Image transmission unit 111 transmits image data sets representing images captured by imaging units 15 together with capturing time data sets indicating capturing times of the images and imaging unit identifiers identifying imaging units 15 capturing the images, in association with each other to image database device 3 via communication unit 13.

Fig. 9A is a diagram showing an example of a functional configuration of terminal device 2, and Fig. 9B is a diagram showing an example of a functional configuration of terminal device 5. Control unit 21 of terminal device 2 executes computer programs read from ROM or storage unit 22 to realize work process information transmission unit 211, image receiving unit 212 and display control unit 213 shown in the figure. Input unit 24 receives inputs of work process data sets each of which includes a product identifier identifying a product, a work process identifier identifying a work process of the product, a worker identifier identifying a worker who performs the work process, and a time data set indicating a starting time and a completion time of the work process. Work process information transmission unit 211 transmits work process data sets received by input unit 24 via communication unit 23 to production management database device 4. Image receiving unit 212 receives image data sets transmitted from image database device 3 via communication unit 23. Display control unit 213 controls display unit 25 to display images represented by the image data sets received by image receiving unit 212. Display control unit 213 controls display unit 25 to display images represented by image data sets in an order determined according to capturing time data sets received together with the image data sets.

A functional configuration of terminal device 5 will now be described with reference to Fig. 9B. Control unit 21 of terminal device 5 executes computer programs read from ROM or storage unit 22 to realize first control unit 215, specifying unit 216, and second control unit 217 shown in the figure. First control unit 215 controls display unit 25 to display progress of each of target work processes in each of progress display areas on the screen in a predetermined layout, and controls display unit 25 to update progress of work processes displayed in the progress display area in accordance with the data sets stored in progress database DB6. More specifically, first control unit 215 may control display unit 25 to display progress of work processes in the progress display areas in various layouts such as a layout where the progress is sorted according to kinds of processes, workers' names, or times and dates.

Specifying unit 216 specifies a work process selected from among work processes progress of which is displayed in progress display areas by display unit 25 under the control of first control unit 215. In the present embodiment, specifying unit 216 specifies a progress display area that is selected by the user from among progress display areas on the screen on the basis of data sets supplied from input unit 24 of terminal device 5 such as a keyboard or a mouse in response to operations made by the user. Second control unit 217 reads, from image database DB1, an image data set corresponding to the progress display area specified by specifying unit 216 and controls display unit 25 to display an image represented by the image data set. Second control unit 217 is an example of an image data-obtaining unit according to the present invention. More specifically, in the present embodiment, second control unit 217 generates search condition data sets each of which includes a product identifier and a work process identifier corresponding to a work process specified by specifying unit 216, transmits the search condition data sets to production management database device 4, and transmits, to image database device 3, imaging unit identifiers and capturing time data sets transmitted from production management database device 4 in response to the transmission of search condition data sets. Image database device 3 reads, from image database DB1, image data sets corresponding to the imaging unit identifiers and the capturing time data sets transmitted from terminal device 5, and transmits the image data sets to terminal device 5. Second control unit 217 of terminal device 5 controls display unit 25 to display images represented by the image data sets transmitted from image database device 3. According to this embodiment, the image data sets that terminal device 5 receives represent still images captured at certain intervals (for example, every one second), and second control unit 217 controls display unit 25 to display the still images according to an order of their capturing times indicated by capturing time data sets received together with the image data sets.

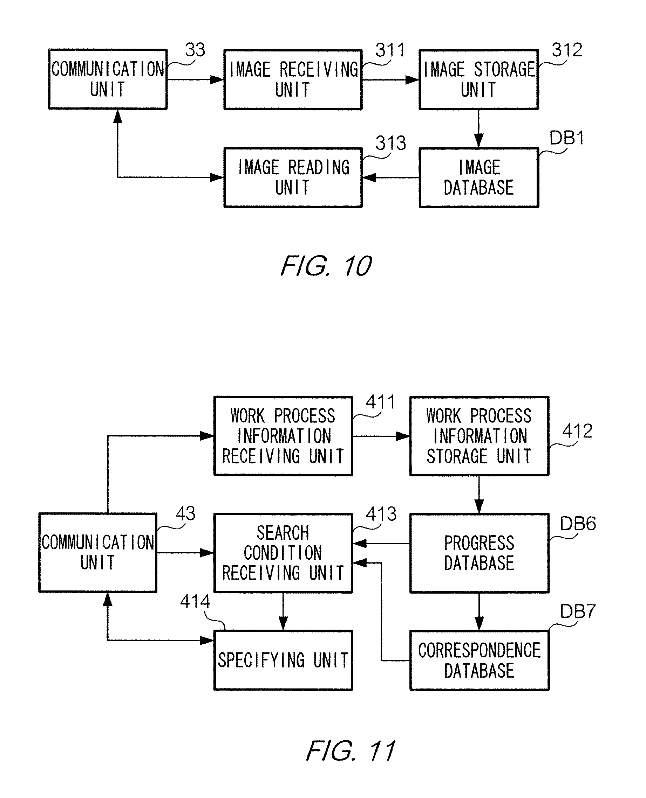

A functional configuration of image database device 3 will now be described with reference to a figure. Fig. 10 is a diagram showing an example of a functional configuration of image database device 3. Control unit 31 of image database device 3 executes computer programs read from ROM or storage unit 32 to realize image receiving unit 311, image accumulation unit 312, and image reading unit 313 shown in the figure. Image receiving unit 311 receives image data sets together with capturing time data sets and imaging unit identifiers from imaging device 1. Image storage unit 312 stores, in image database DB1, the image data sets with the capturing time data sets and the imaging unit identifiers received by image receiving unit 311. Image reading unit 313 reads, from image database DB1, image data sets in response to an instruction from terminal device 5 and transmits the image data sets to terminal device 5.

A functional configuration of production management database device 4 will now be described with reference to Fig. 11. Fig. 11 is a diagram showing an example of a functional configuration of production management database device 4. Control 41 of production management database device 4 executes computer programs read from ROM or storage unit 42 to realize work process information receiving unit 411, work process information storage unit 412, search condition receiving unit 413 and specifying unit 414 shown in the figure. As shown in the figure, work process information receiving unit 411 receives work process data sets transmitted from terminal device 2. Work process information storage unit 412 generates progress data sets based on the work process data sets, and stores the progress data sets in progress database DB6. Specifically, in the present embodiment, work process information storage unit 412 generates a data set indicating a completion time of work process on the basis of a time when work process information storage unit 412 receives a work process data set. Then, work process information storage unit 412 generates a data set indicating a starting time of the work process based on the completion time of the work process and a period of time spent on the work process indicated by a data set included in the work process data set. Then, work process information storage unit 412 generates a progress data set including the data set indicating the completion time of the work process and the data set indicating the starting time of the work process.

Search condition receiving unit 413 receives search condition data sets each of which includes a product identifier and a work process identifier from terminal device 5. Specifying unit 414 specifies an imaging unit identifier and a time data set corresponding to a product identifier and a process identifier included in the search condition data set received by search condition receiving unit 413, by referring to correspondence database DB7 and progress database DB6. More specifically, specifying unit 414 specifies an imaging unit identifier corresponding to the process identifier included in the search condition data set by referring to correspondence database DB7, and specifies a time data set corresponding to the product identifier and the process identifier by referring to progress database DB6. Specifying unit 414 transmits, to image database device 3, an instruction data set that instructs image database device 3 to read image data sets corresponding to the imaging unit identifier and the time data set. In addition, specifying unit 414 transmits, to terminal device 5 from which the search condition data set was transmitted, the image data sets transmitted from image database device 3 in response to the transmission of the instruction data set.

### A-2: Operation

### A-2-1: Operation of Data Storage

An example of operation of the present system will now be described. Each imaging device 1 captures images of work area 100 to generate image data sets at intervals of a predetermined time period (in the present embodiment, every one second), and serially transmits the image data sets to image database device 3 together with capturing time data sets and imaging unit identifiers. Image database device 3 receives the image data sets transmitted from each imaging device 1, and stores the image data sets in image database DB1. In this way, image data sets generated every one second at each work area are stored in image database DB1 sequentially. Imaging device 1 captures images of a work area not only while a worker performs a work process assigned to him/her, but also before the worker starts to perform the work process and after the worker completes the work process.

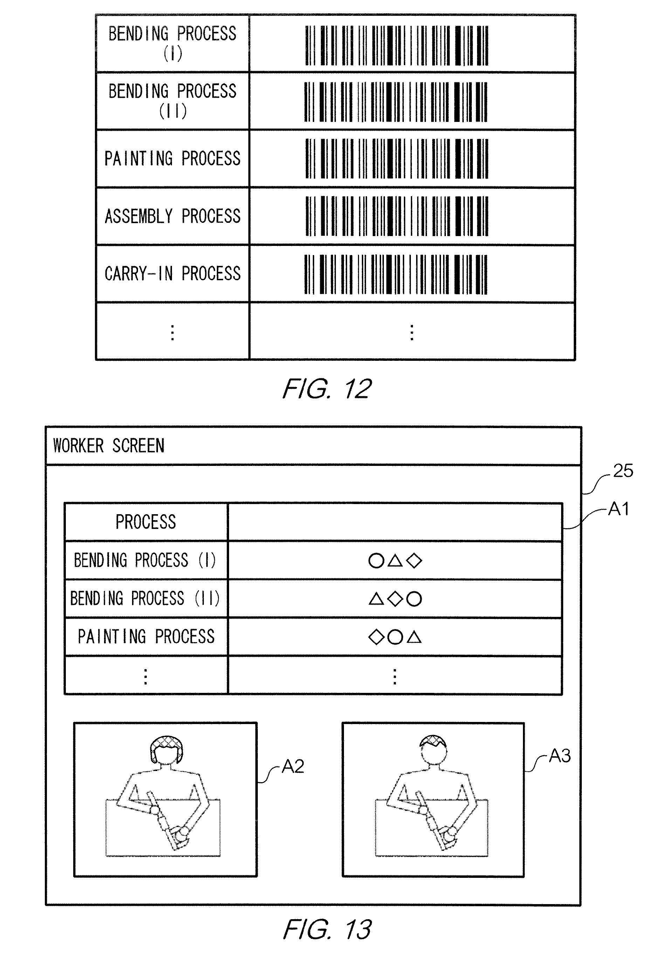

A list of barcodes shown in Fig. 12 is provided in each work area 100, and a worker operates barcode reader 241 to read a barcode indicating a work process that the worker is going to perform. It is to be noted that the worker does not have to read a barcode by use of barcode reader 241 if a process s/he is to perform is predetermined (preliminarily registered in a device of the system, etc.). Control unit 21 of terminal device 2 transmits, to terminal device 5, a data set containing a work process identifier indicating the selected work process identified by a data set output from barcode reader 241. Terminal device 5 specifies an imaging unit identifier corresponding to the work process identifier contained in the data set received from terminal device 2 by referring to correspondence database DB7, and transmits a data set containing the imaging unit identifier to image database device 3. Image database device 3 serially transmits, to terminal device 2, image data sets stored with the imaging unit identifier contained in the data set received from terminal device 5. Terminal device 2 displays by display unit 25 images represented by the image data sets serially transmitted from image database device 3.

Fig. 13 is a diagram showing an example of a screen displayed by display unit 25 of terminal device 2. As shown in the figure, the screen displayed by display unit 25 includes work process list display area A1, target image display area A2 and related image display area A3. Control unit 21 controls display unit 25 to display an image representing a list of work processes in work process list display area A1. In addition, control unit 21 controls display unit 25 to display, in target image display area A2, images represented by the image data sets received from image database device 3, i.e. images captured in a work area where the worker is located.

In related image display area A3, images described below are displayed. The worker can let display unit 25 display images relating to a work process that the worker performs, such as images of a preceding work process and a subsequent process of the work process that the worker performs. According to this embodiment, the worker can specify a work process identifier of the related work process by using input unit 24. Specifically, the worker operates barcode reader 241 to read a barcode corresponding to the related process that the worker wants to browse. Control unit 21 transmits a data set containing the work process identifier supplied from input unit 24 to terminal device 5. Terminal device 5 specifies an imaging unit identifier corresponding to the work process identifier contained in a data set received from terminal device 2, and transmits, to image database device 3, the data set containing the imaging unit identifier. Image database device 3 serially transmits, to terminal device 2, image data sets stored with the imaging unit identifier contained in the data set received from terminal device 5. Display unit 25 of terminal device 2 displays, in related image display area A3, images represented by the image data sets transmitted from image database device 3. The worker can perform his/her work process while watching his/her images displayed in target image display area A2 and/or images of the related process displayed in related image display area A3.

In a state that the screen shown in Fig. 13 is displayed by display unit 25, the worker performs his/her work process in work area 100. While the worker performs his/her work process in work area 100, imaging unit 15 captures images of a work process performed by the worker at intervals of the predetermined time period, and image data sets representing the images are serially stored in image database DB 1.

When the worker completes his/her work process, the worker carries out an operation for registering the completion to the system by use of input unit 24 of terminal device 2. Specifically, the worker operates barcode reader 241 to read a barcode printed on his/her business card and/or nameplate indicating his/her worker identifier. In addition, the worker operates barcode reader 241 to read barcodes indicating a product identifier and a work process identifier printed on, for example, a sheet of a design drawing of the product. In addition, the worker inputs a time period spent for performing the work process (hereinafter referred to as "working time") using input unit 24 of terminal device 2. Control unit 21 of terminal device 2 generates a work process data set containing the product identifier, the worker identifier, the work process identifier, the data set indicating the completion time and working time of the work process, by use of data sets supplied from input unit 24, and transmits the work process data set to production management database device 4.

Production management database device 4 stores the work process data set received from terminal device 2 in progress database DB6 as a progress data set. In this way, data sets indicating progress history of the work process are serially stored in progress database DB6.

### A-2-2: Browsing Operation

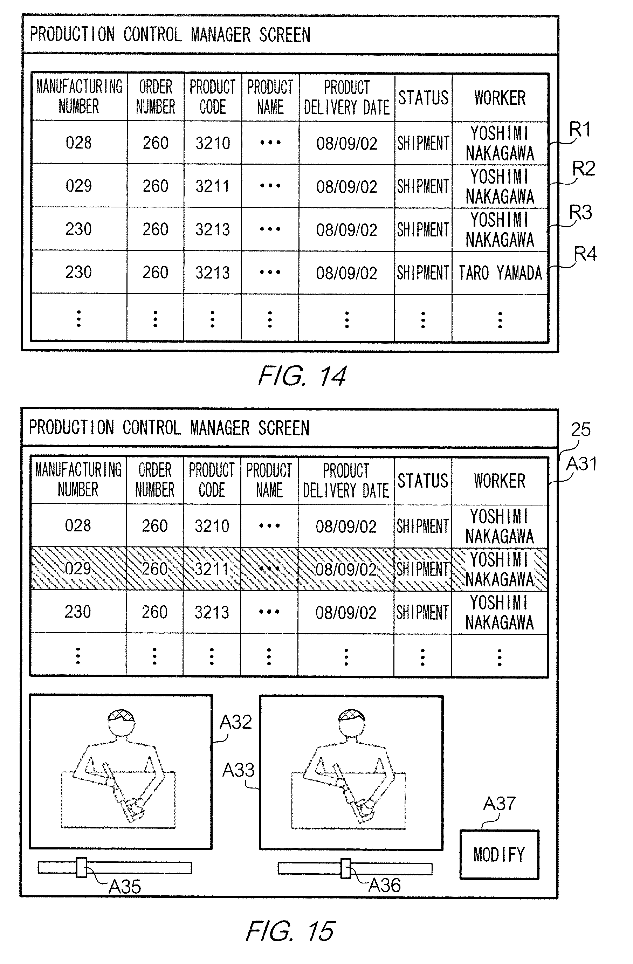

An operation carried out when information on a work process is browsed by a user will now be described. A user can browse information on each of work processes using terminal device 5. First, the user operates input unit 24 to cause terminal device 5 to display progress of work processes for producing a product in the progress display areas of the screen. Control unit 21 of terminal device 5 controls display unit 25 to display the progress in progress display areas in response to a data set supplied from input unit 24. Fig. 14 is a diagram showing examples of information that display unit 25 displays in progress display areas. As shown in the figure, information on each of work processes performed for producing a product is displayed on the screen. More specifically, in the example shown in Fig. 14, items "manufacturing number," "order number," "product code," "product name," "product delivery date," "status," and "worker" of each work process are displayed by display unit 25 in association with each other. Control unit 21 of terminal device 5 obtains various kinds of data sets from production management database device 4 according to data sets supplied from input unit 24. In addition, control unit 21 controls display unit 25 to display, by use of the data sets obtained from production management database device 4, the information on each of work processes for the target product in each of progress display areas in a predetermined layout, and controls display unit 25 to update the information displayed in each progress display area in accordance with the data sets stored in progress database DB6. In the example shown in Fig. 14, control unit 21 obtains, from production management database device 4, data sets indicating various kinds of information such as manufacturing numbers, order numbers, product codes, product names, product delivery dates, statuses and workers, which correspond to each of work processes performed for producing a product, and displays the obtained information.

It is to be noted that, when one work process is performed by plural workers, plural records with regard to the same work process performed at the same time are displayed in succession such as records R3 and R4 in the example shown in Fig. 14. In addition, in the example shown in Fig. 14, no progress display area is provided for an uncompleted work process. Instead of the configuration, a blank progress display area may be provided for an uncompleted work process. In addition, control unit 21 may control display unit 25 to display the progress display areas in various kinds of layouts such as a layout to display progress display areas in an order according to work processes, in an order according to time and date, and in an order according to workers' names.

In a state that information on work processes is displayed in the progress display areas as shown in Fig. 14, the user may operate input unit 24 of terminal device 5 to specify a product and a work process for browsing images of the work processes. In the present embodiment, the user specifies a product and a work process by selecting a progress display area regarding the work process from among the progress display areas in the screen displayed by display unit 25 by use of input unit 24 of terminal device 5. Terminal device 5 specifies the progress display area selected by the user in the screen displayed by display unit 25 based on a data set supplied from input unit 24. Then, terminal device 5 specifies image data sets corresponding to the specified progress display area by referring to data sets stored in progress database DB6 and correspondence database DB7, reads the image data sets from image database DB1, and displays the images represented by the image data sets by display unit 25.

Control unit 21 of terminal device 5 controls display unit 25 to display a screen for showing images of work processes instead of the screen for showing a list of information on work processes in progress display areas when a data set specifying the progress display area selected by the user is supplied from input unit 24. Fig. 15 is a diagram showing an example of a screen for showing images of work processes displayed by display unit 25. As shown in the figure, the screen includes progress display areas A31, target image display area A32 and related image display area A33. Control unit 21 controls display unit 25 to display the same information on work processes as displayed on the screen shown in Fig. 14 in progress display areas A31. Furthermore, control unit 21 controls display unit 25 to display, in target image display area A32, images represented by image data sets obtained from image database device 3.

In this case, control unit 21 controls display unit 25 to display images represented by the image data sets from image database device 3 in chronological order in accordance with time data sets stored with the image data sets at a switching rate in accordance with a data set supplied from input unit 24 in response to an operation made by the user. More specifically, for example, control unit 21 controls display unit 25 to display the images by successively switching them, for example, every 0.5 seconds. The user watches the images displayed by display unit 25 as a fast-forwarding moving image because the images are captured every one second.

The user can modify the switching rate of the images using input unit 24 in the screen shown in Fig. 15. Specifically, for example, control unit 21 may control display unit 25 to display tabs A34 and A35 as shown in Fig. 15, and the user may move positions of tabs A34 and A35 by operating input unit 24 to modify the switching rate. When the user operates input unit 24, input unit 24 outputs a data set in accordance with the operation, and control unit 21 modifies the switching rate of at which images are displayed in accordance with the data set supplied from input unit 24.

In addition, in the state that the above-mentioned screen is displayed, the user can operate input unit 24 of terminal device 5 to display, in related image display area A33, images that relate to the target images displayed in target image display area A32. More specifically, for example, the user can specify a kind of related image from among various kinds of related images, such as images of preceding work process and/or subsequent work process of the work process whose images are displayed in target image display area A32, images of the same kind of work process as the work process whose images are displayed in target image display area A32 that was performed by another worker, and images of the same kind of work process as the work process whose images are displayed in target image display area A32 that was performed a year previously. Control unit 21 generates a search condition data set that includes a product identifier identifying the product and a work process identifier identifying the work process selected by the user in accordance with a data set supplied from input unit 24, and transmits the search condition data set to production management database device 4.

When control unit 41 receives the search condition data set from terminal device 5, control unit 41 of production management database device 4 specifies an imaging unit identifier and a time data set corresponding to the product identifier and the work process identifier contained in the search condition data set referring to correspondence database DB7 and progress database DB6, and transmits, to image database device 3, an instruction data set containing the imaging unit identifier and the time data set. When image database device 3 receives the imaging unit identifier and the time data set from production management database device 4, image database device 3 reads, from image database DB1, image data sets corresponding to the imaging unit identifier and the time data set, and transmits the image data sets to production management database device 4 as a response to the instruction data set. Production management database device 4 transmits the data sets received from image database device 3 to terminal device 5, which is the source device of the search condition data set.

When control unit 21 of terminal device 5 receives the data sets from production management database device 4, control unit 21 controls display unit 25 to display images represented by the data sets. In the present embodiment, control unit 21 controls display unit 25 to display the images represented by the data sets in related image display area A33 as shown in Fig. 15.

In addition, the user can sort records on the screen shown in Fig. 14 or Fig. 15 according to any item among the records. When the user operates input unit 24 to select an item from among the items displayed on the screen, control unit 21 sorts the records according to the selected item (for example, by workers, by work processes, and so on) in accordance with a data set supplied from input unit 24.

As described above, according to the present embodiment, a work process and image data sets representing images of the work process and/or information on the work process (a worker of the work process, a work area where the work process was performed, and so on) are linked with each other, and when the user specifies one of work processes of a product, images of the work process and/or information on the work process are displayed. Accordingly, the user can easily understand information on each of work processes. In addition, according to the present embodiment, the user can be aware of the situations in the work area before the work process is started and after the work process is completed, by viewing images captured before the work process is started and after the work process is completed.

In the present embodiment, the worker may be allowed to view the screens to confirm information on his/her work process, and/or to modify the information if it contains any incorrect information. In this case, for example, the worker operates input unit 24 of terminal device 5 to cause terminal device 5 to display information on work processes that the worker performed in progress display areas. Control unit 21 of terminal device 5 controls display unit 25 to display information on the work processes in progress display areas as shown in Fig. 14 in accordance with a data set supplied from input unit 24. Control unit 21 of terminal device 5 obtains various kinds of data sets from production management database device 4 in accordance with the data set supplied from input unit 24, and controls display unit 25 to display information on each work process of a product in each progress display area in a predetermined layout by use of the obtained data sets. In addition, control unit 21 controls display unit 25 to update information displayed in each progress display area in accordance with data sets stored in progress database DB6.

The worker watches to check whether information displayed on the screen as shown in Fig. 14 is correct, and if there is any incorrect information shown on the screen, the worker corrects the information. Incorrect information may be displayed, for example, when an incorrect barcode was read when the work process was started. When the worker needs to correct the incorrect information, s/he operates input unit 24 of terminal device 5 to specify a product and a work process with the incorrect information displayed in a progress display area in a state that the progress display areas are displayed as shown in Fig. 14. In the present embodiment, the worker operates input unit 24 of terminal device 5 to select a record from among the plural records displayed by display unit 25 to specify the product and the work process. Terminal device 5 specifies a progress display area from among the plural progress display areas on the screen displayed by display unit 25 in accordance with a data set supplied from input unit 24, and specifies image data sets corresponding to the specified progress display area by referring to the data sets in progress database DB6 and in correspondence database DB7. Then, terminal device 5 reads the specified image data sets from image database DB1 and displays images represented by the image data sets.

The worker selects a progress display area where the incorrect information that s/he needs to correct is displayed, and carries out operations for correcting the incorrect information displayed in the progress display area (for example, an operation to select modification button A37 shown in Fig. 14, and so on). Specifically, the worker may correct, for example, a manufacturing number, a product name, a link to an image data set, and so on. Control unit 21 of terminal device 5 updates progress data sets stored in progress database DB6 in accordance with the operations made by the worker to correct the incorrect information.

### B: Second Embodiment

### B-1: Configuration

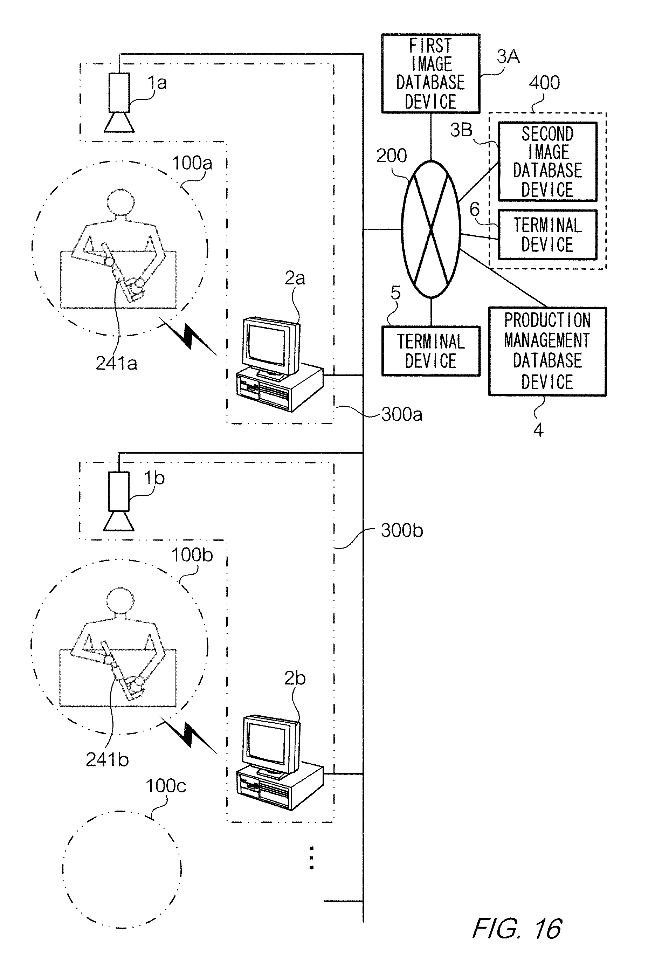

A second embodiment of the present invention will now be described. Fig. 16 is a diagram showing a configuration of a work process management system according to the present embodiment, and corresponds to Fig. 1 relevant to the first embodiment described above. A main difference between the work process management system of the present embodiment and the work process management system of the first embodiment described above is that, in the system of the present embodiment, a worker carries out operations for linking data sets of his/her work process to image data sets of his/her work process when the worker inputs the data sets of his/her work process after the work process is completed. In the following description, components that the system of the present embodiment has in common with the system of the first embodiment described above have the same symbols as those used in the first embodiment, and explanations of the common components are omitted if they are not necessary. It is to be noted that, in the present embodiment, terminal device 2 may not include barcode reader 241.

First image database device 3A and second image database device 3B are, for example, general-purpose computers, and devices that store image data sets output from imaging device 1. First image database device 3A is provided in a facility where work area 100 is located. On the other hand, second image database device 3B is provided in a separated location from that of work area 100, for example, central office 400 that is located offshore. Hardware configurations of first image database device 3A and second image database device 3B are similar to the configuration shown in Fig. 4 in the first embodiment described above. Terminal device 6 is a computer device such as a personal computer, and a device that executes a variety of processes in accordance with contents of operation by a user. Terminal device 6 is provided in central office 400, like second image database device 3B.

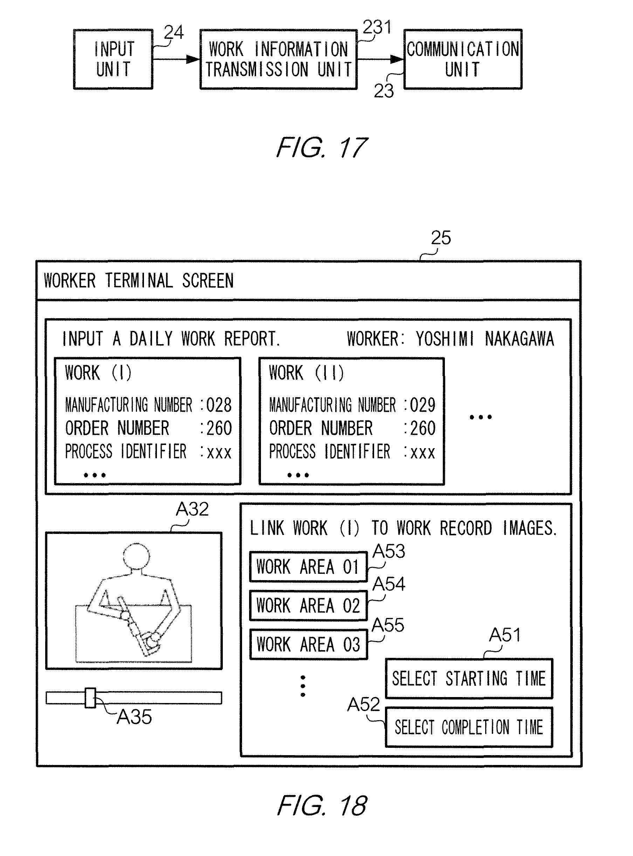

Fig. 17 is a diagram showing an example of a functional configuration of terminal device 2 according to the present embodiment, and corresponds to the diagram shown in Fig. 9A relevant to the first embodiment described above. Control unit 21 of terminal device 2 executes computer programs read from ROM or storage unit 22 to function as display control unit 231 and work process information transmission unit 231 in the figure Work process information transmission unit 231 transmits, to production management database device 4, work process data sets each of which includes a product identifier identifying the product, a work process identifier identifying a work process, a worker identifier identifying a worker and a time data set indicating a starting/completion times of the work process , via communication unit 23.

### B-2: Operation

An example of operation of the present embodiment will now be described. The operation of the present embodiment is different from the operation of the first embodiment in that a timing of inputting data sets on a work process is different and in that a part of the image data sets stored in first image database device 3A is extracted and transmitted to second image database device 3B. Explanations of parts of operation of the present embodiment that are similar to parts of operation described above in connection with the first embodiment are omitted if they are not necessary.

### B-2-1: Operation of Image Data Accumulation

Operation of imaging device 1 is similar to the operation described above in connection with the first embodiment. More specifically, imaging device 1 captures images in work area 100 at intervals of a predetermined time period, and transmits image data sets representing the images to first image database device 3A together with the capturing time data sets and imaging identifiers identifying the images. First image database device 3A receives the image data sets from each of the plural imaging devices 1, and stores the image data set in image database DB1 (hereinafter, referred to as "image database DB1A"). In this way, image data sets of each work area 100 that are captured at intervals of the predetermined time period (for example, every one second) are serially stored in image database DB1A.

A worker performs his/her work processes in work area 100. Scenes of the work process performed by the worker are captured at intervals of a predetermined time period by imaging unit 15, and image data sets representing the images are stored in image database DB1A. In the first embodiment described above, a worker is required to conduct some operations before s/he starts his/her work process such as an operation for scanning a barcode and/or an operation for causing display unit 25 to display a screen before s/he starts his/her work process. In the present embodiment, a worker does not have to carry out such operations as described above. In addition, in the first embodiment described above, the worker is also required to conduct some operations after s/he completes his/her work process. In the present embodiment, the worker does not have to carry out such an operation when s/he completes a work process and/or starts other work.

### B-2-2: Operation of Progress Information Storage

An operation for storing progress data sets will now be described. In the present embodiment, a worker uses terminal device 2 to input a work process data set on an appropriate date and time each time a work process is performed, thus creating a daily work report after completing the work. The work process data set input by the worker includes a product identifier identifying a product, a process identifier identifying a work process, a worker identifier identifying a worker and a time data set indicating a starting time/completion time of the work process. It is to be noted that information included in the work process data set is not limited to the foregoing, and other information may be included in the work process data set. In addition, the worker links the work process data set to the image data sets via input unit 24.

Fig. 18 is a diagram showing an example of a screen for the worker to input a work process data set. The worker inputs a work process data set including a product identifier (a manufacturing number), a process identifier, and so on, and links (associates) the work data set to the image data sets. The worker may associate the work data set by, for example, selecting a work area (i.e. imaging device 1) with respect to each work data set using button A53, A54, A55, ... shown on the screen exemplified in Fig. 18. In this case, a table representing a correspondence between work areas and imaging devices 1 may be stored in storage unit 42 of production management database device 4 in advance. In this case, control unit 21 of terminal device 2 controls display unit 25 to displays images corresponding to the selected button in image display area A32. The worker confirms images displayed in image display area A32 visually, adjusts starting time and/or completion time of the image data sets that are being played using tab A35, and presses buttons A51 and/or A52 to fix the starting time and/or completion time of each work process.

The worker carries out an operation to register the work process data set when s/he completes the input of the work process data set. Control unit 21 of terminal device 2 transmits, to production management database device 4 via communication unit 23, the work process data set linked to the image data sets from the starting time to the completion time in association with a data set supplied from input unit 24 when the operation to register the work process data set is performed. Production management database device 4 stores the work process data set in progress database DB6 as a progress data set when the work process data set is received from terminal device 2. By the above operation, progress information representing a progress history is stored in progress database DB6 sequentially.

### B-2-3: Browsing Operation

An operation performed when information about a work process is browsed will now be described. A user can browse information about a work process, via terminal device 5. First, the user performs an operation to display each process for each work object (each product) in each progress display area via input unit 24 of terminal device 5. Control unit 21 of terminal device 5 controls display unit 25 to display progresses in progress display areas in accordance with a data set supplied from input unit 24 (refer Fig. 14). In the example shown in Fig. 14, a list of information about each of plural work processes that are performed when a product is produced is displayed on this screen. This screen is similar to the screen according to the above first embodiment; therefore, detailed explanation of the screen is omitted.

In the state that the progress display areas exemplified in Fig. 14 are displayed, the user performs an operation to specify a product and a work process that s/he wants to browse via input unit 24 of terminal device 5. Operation of terminal device 5 is similar to the operation according to the above first embodiment; therefore, detailed explanation of the operation is omitted. It is to be noted that, in the present embodiment, terminal device 5 may not display progress display areas.

### B-2-4: Operation of Image Data Extraction

An operation when a part of the image data sets stored in first image database device 3A is extracted in accordance with a predetermined algorithm and transmitted to second image database device 3B will now be described. A user of terminal device 6 may not be able to browse the images stored in first image database device 3A suitably when a communication environment between terminal device 6 and first image database device 3A is poor and transmission rate is slow because central office 400 is located far from first image database device 3A. In view of this situation, in the present embodiment, a part of the image data sets stored in first image database device 3A is extracted and transmitted to second image database device 3B, which is provided close to terminal device 6. Control unit 31 of first image database device 3A extracts a part of the image data sets stored in image database DB1A at a predetermined timing. More specifically, for example, control unit 31 may extract image data sets that are captured every ten seconds from image data sets whose images are captured every one second. As described above, control unit 31 may extract, from image data sets that are captured with respect to each first predetermined time unit, image data sets that are captured with respect to each second predetermined time unit that is longer than the first predetermined time unit. Control unit 31 transmits the extracted image data sets to second image database device 3B.

When second image database device 3B receives the image data sets from first image database device 3A, second image database device 3B registers the received image data sets in image database DB1 of second image database device 3B (hereinafter, referred to as "image database DB1B").

### B-2-5: Browsing Operation Abroad

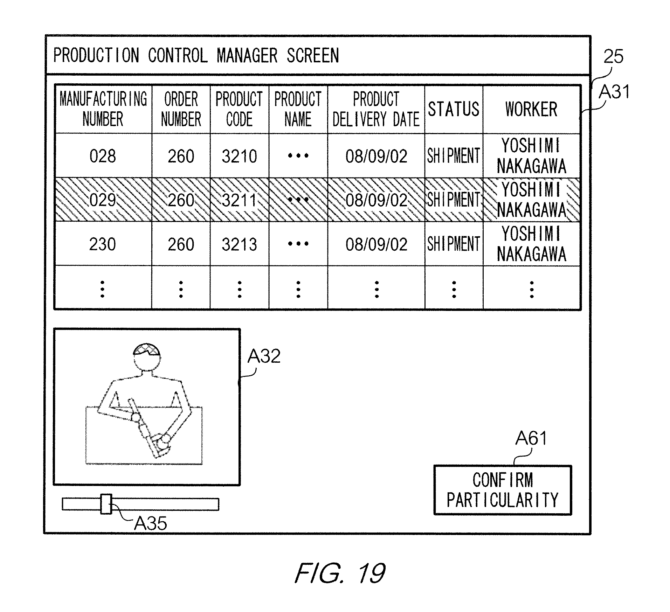

An operation when information about a work process is browsed by terminal device 6 provided in central office 400 will now be described. A user in central office 400 can browse information about a work process via terminal device 6. First, the user carries out an operation to display progress display area of each work process for each work object (each product) via input unit 24 of terminal device 6. Control unit 21 of terminal device 6 controls display unit 25 to display progress display areas exemplified in Fig. 19 in accordance with a data set supplied from input unit 24. In the example shown in Fig. 19, a list of information about each of plural work processes that are performed when a product is produced is displayed on this screen. Progress display areas displayed on this screen are similar to the areas shown in Fig. 14 in the above first embodiment.

In addition, image data sets corresponding to the area selected from progress display areas A31 is obtained from second image database device 3B by control unit 21 of terminal device 6, and images represented by the obtained image data sets are displayed in image display area A32. The images displayed in image display area A32 are images represented by the image data sets obtained from second image database device 3B.

Not all of the image data sets stored in first image database device 3A are used, but a part of the image data sets stored in first image database device 3A are used because images displayed in image display area A32 are images represented by the image data sets stored in second image database device 3B. In this situation, some users may want to view not only some of the images but also detailed images about a work process. In this case, the user specifies, from a list displayed in progress display area A31, via input unit 24 of terminal device 6, an area corresponding to a work process on which s/he wants to obtain image data sets, and inputs an instruction for obtaining image data sets from first image database device 3A by, for example, selecting button A61 shown in Fig. 19. Control unit 21 of terminal device 6 transmits, to first image database device 3A in accordance with a data set supplied from input unit 24, a request to obtain image data sets corresponding to the specified area. First image database device 3A reads image data sets from image database DB1 in accordance with the request received from terminal device 6, and transmits the image data sets to terminal device 6.

When control unit 21 of terminal device 6 receives the image data sets from first image database device 3, control unit 21 controls display unit 25 to display images represented by the received image data sets in image display area A32. The user can browse more detailed images about the work process that s/he specified, by referring to the screen displayed in image display area A32.

As described above, according to the present embodiment, the work process data set does not have to be input each time a work process is started, because work process data set is linked to image data sets collectively after a work process is finished. Therefore, in a case of a job for which lead time (time required for a work about one work process) is short, a task of inputting a work data set in each case is omitted and work efficiency can be improved. For example, in a case when work processes for "product A" (the process requires 5 seconds) are performed from 10:00 to 11:00 and work processes for "product B" (the process requires 10 seconds) are performed from 11:00 to 12:00, a worker does not input any work process data set each time when a work process for a product is started, but inputs work process data sets after completing both of the work processes for "product A" and for "product B". In this case, the worker does not input a starting time of each work process for each product, but inputs "10:00" as a start time of a work process of "product A," "11:00" as a completion time of the work process of "product A," "11:00" as a starting time of a work process of "product B," and "12:00" as a completion time of the work process of "product B." Work efficiency is improved by work data sets not being input with respect to each work process that is performed, but being input collectively after the work processes are completed as described above. For example, in a factory producing many kinds of products and/or parts piecemeal, in a case that a worker inputs a work data set with respect to each time when a work process is started or completed via input unit 24 in each case, to input work data sets (a product identifier, a worker identifier, and so on) is often complicated because a number of times of input increases as a number of kinds of products and/or parts increases. On the other hand, according to the present embodiment, workload of a worker is reduced because the worker does not have to input a work data set each time when a work process is started or completed.

### C: Third Embodiment

A third embodiment of the present invention will now be described. A difference between the process management system of the present embodiment and the process management system of the second embodiment described above is that, a user of terminal device 5 inputs work process data sets and links (associates) work process data sets to image data instead of a worker linking work process data sets to image data sets at the end of a working day. Explanations of parts of operation of the present embodiment that are similar to parts of operation described above in connection with the second embodiment are omitted if they are not necessary.

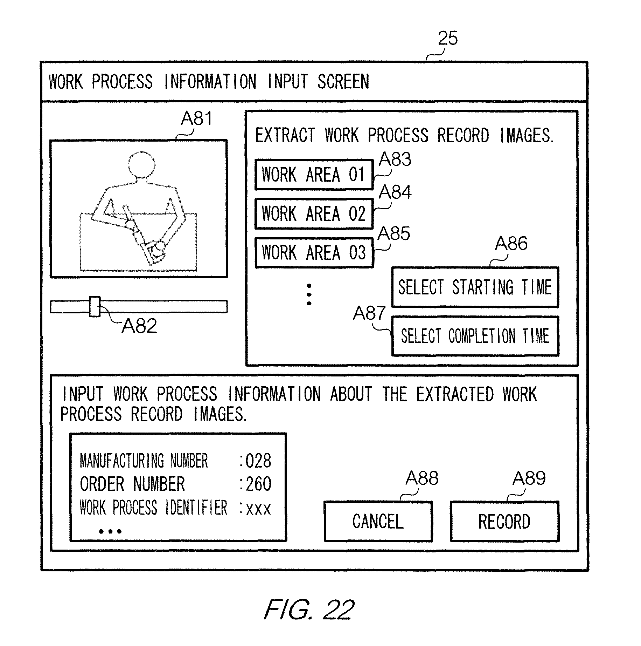

An operation in which a user of terminal device 5 inputs a work process data set and associates the work process data set with image data sets will now be described. The user performs an operation to associate a work process data set with image data sets using input unit 24 of terminal device 5. Input unit 24 outputs a data set in accordance with an operation performed by the user, and control unit 21 controls display unit 25 to display a screen exemplified in Fig. 22 in accordance with the data set supplied from input unit 24.

The user selects a work area (i.e. imaging device 1) using button A83, A84, A85, .... Control unit 21 obtains image data sets corresponding to the selected imaging device 1 from first image database device 3A, and displays the obtained image data sets in image display area A81. The user visually associates the work data set with image data sets confirming work shown by the images displayed in image display area A81. First, the user visually confirms images displayed in image display area A81, specifies a starting time and/or completion time of each work process using tab A82, and determines a starting time and/or a completion time of image data set using button A86 and/or button A87.

When image data sets are extracted in accordance with the starting time and/or the completion time that are determined by the user, the user inputs a work process data set (a product identifier, an order identifier, a work process identifier, and so on) corresponding to the extracted image data sets via input unit 24. The user inputs an instruction to register the work process data set via, for example, button A89 when the work process data set is input. Control unit 21 transmits the work process data set to production management database device 4 in accordance with a data set supplied from input unit 24. Production management database device 4 stores the work process data set in progress database DB6 as a progress data set when receiving the work process data set from terminal device 5. By the operation described above, progress data sets representing progress history are stored sequentially in progress database DB6.

### D: Modification

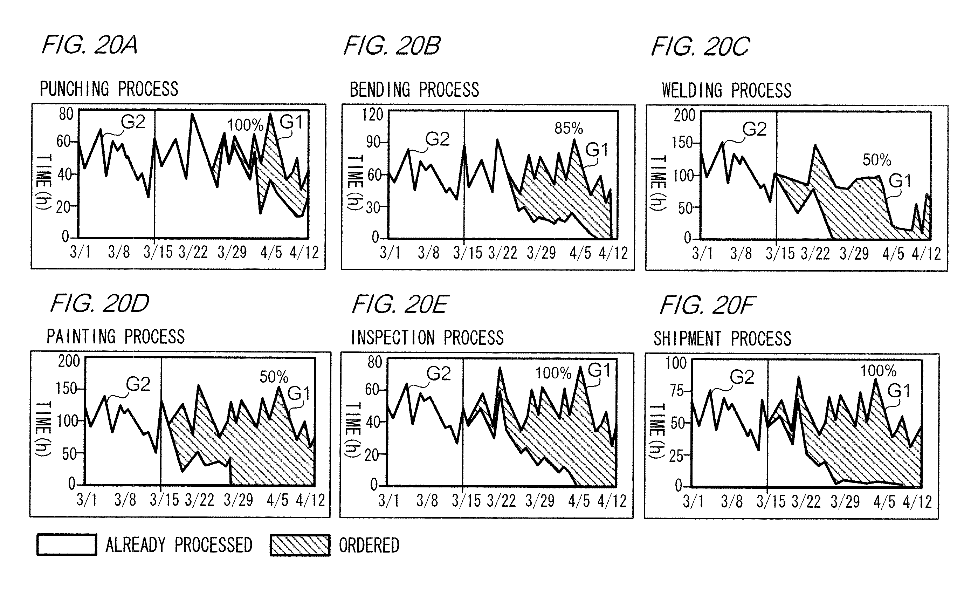

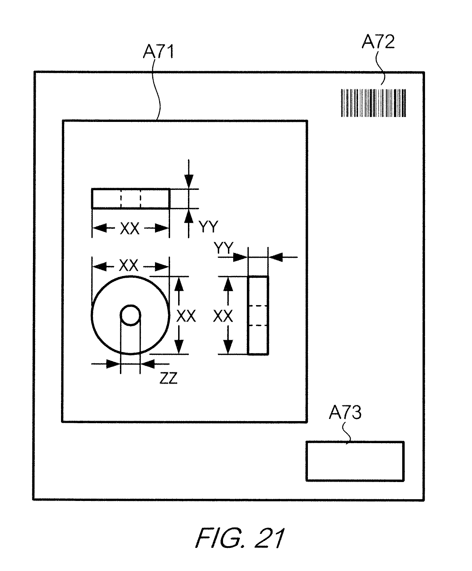

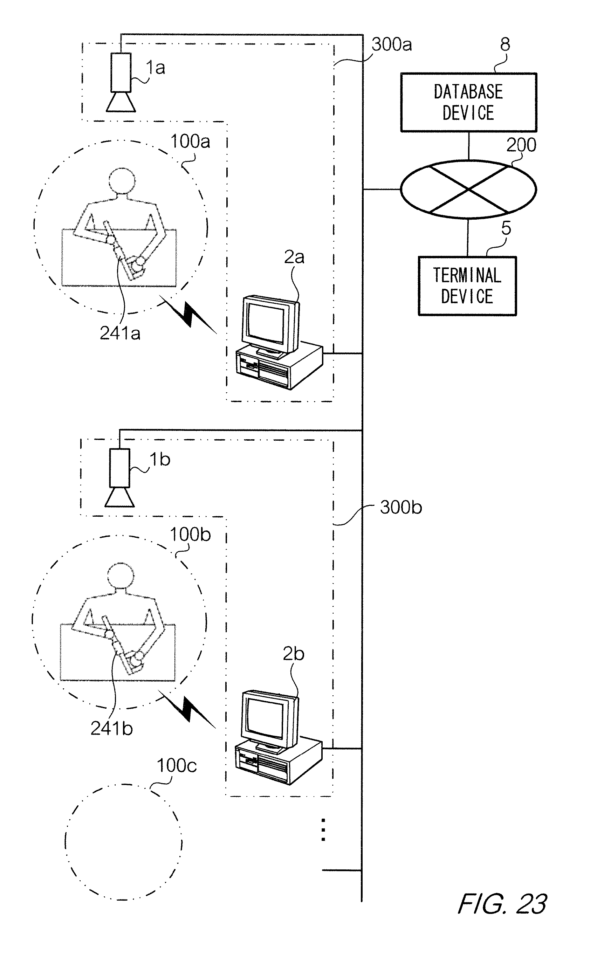

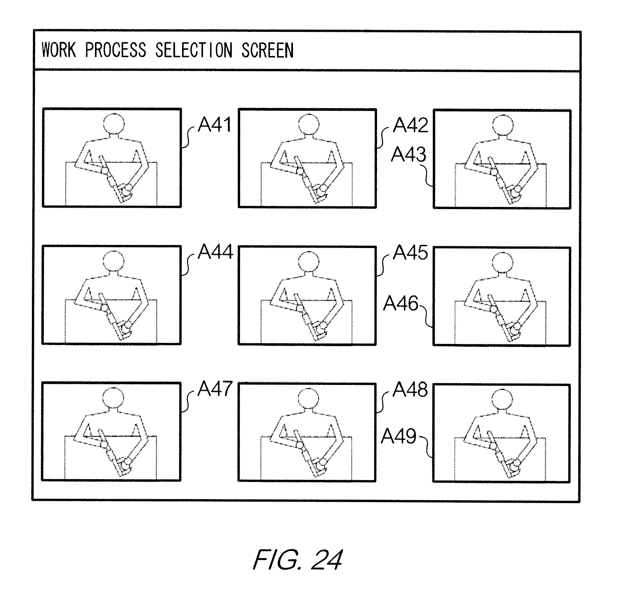

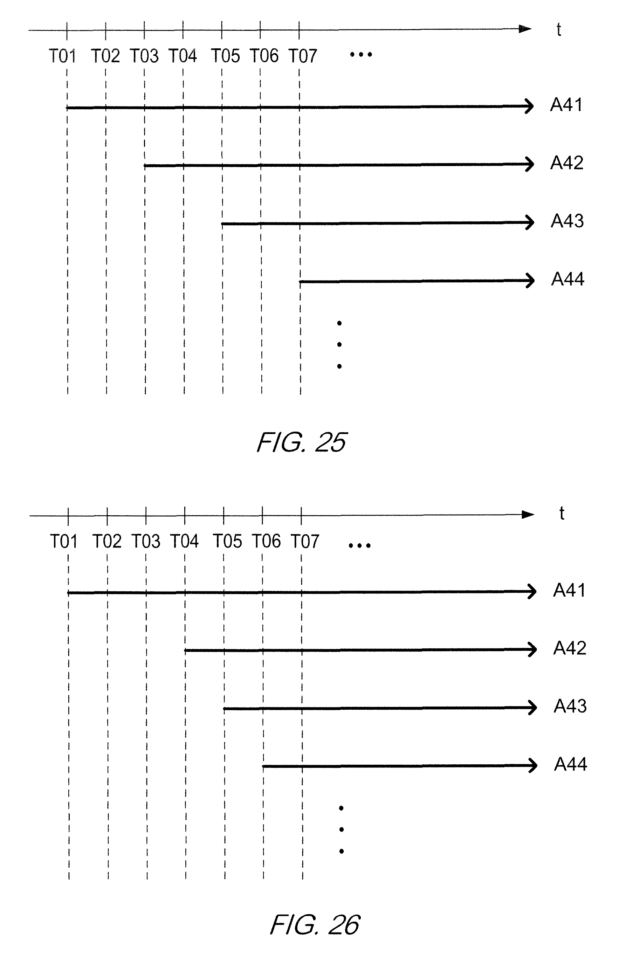

The present invention is not limited to the embodiment described above, but may be implemented in another embodiment. For example, the present invention may be implemented in a modified embodiment described below. It is to be noted that the present invention may be implemented in an embodiment combining plural modifications.
(1) In the embodiments described above, one work process is performed at one work area. However, plural work processes may be performed at one work area. Specifically, for example, five processes may be shared at two work areas. In this case, for example, terminal device 2 may transmit a work process data set including a work area identifier identifying the work area to production management database device 4, and production management database device 4 may store the work area identifier in association with a work process identifier and/or a time data set in progress database DB6.
   In addition, in the embodiments described above, one product is produced by plural work processes. However, one product may be produced by one work process.
(2) In the embodiments described above, the work process management system according to the present invention is used at a factory where sheet metal processing is carried out. However, the work process management system can be used in a variety of forms, for example, for management of a manufacturing process of another product such as an integrated circuit, management of a construction process of a building such as a house, and so on. In addition, products according to the present invention are not limited to manufactured products, and may include products in the service industry, and interim products such as parts. Specifically, for example, the products may be commercial products that require plural work processes such as booking a flight, booking a room of a hotel, and booking a ticket for a theater at a tourist agency. In other words, a work process of the production management system according to the present invention may be any work process that requires one or more processes.
(3) In the embodiments described above, two database devices of image database device 3 and production management database device 4 are used. However, image database device 3 and production management database device 4 may be combined. For example, database device 8 exemplified in Fig. 23 is such a device functioning as both combine image database device 3 and production management database device 4.
   In addition, in the embodiments described above, the system includes imaging device 1, terminal device 2, terminal device 5, image database device 3, and production management database device 4 that are connected to communication network 200. However, for example, terminal device 5, production management database device 4, image database device 3 may be comprised in a single device.
   In the embodiments described above, image data sets are stored in image database DB1 in association with imaging unit identifiers and capturing time data sets. However, data sets that are associated with image data sets are not thus limited, and other kinds of data sets may be attached to image data sets.
   In addition, in the embodiment described above, a data set including a product identifier, a work process identifier, a worker identifier, and a time data set indicating starting time and/or completion time of a work process, is used as a work process data set. However, a work process data set is not thus limited, and may be a data set including other kinds of data sets. For example, a work process data set may include a work area identifier identifying a work area. Additionally, for example, a work data set may not include a worker identifier. In other words, a work data set may include any kinds of data sets as far as it includes a work object identifier identifying a work object (a product identifier in the embodiments described above) and a time data set indicating a starting time and/or a completion time of a work process.
(5) In the embodiments described above, a completion time of a work process is input via barcode reader 241, and a time period that was required for a work process is input via input unit 24. However, means to input a data set indicating a starting time and a completion time of a work process are not thus limited. For example, both of a starting time and a completion time of a work process may be input via barcode reader 241. In addition, for example, a detection unit such as a heat detection sensor for detecting presence of a worker may be provided with terminal device 2, and control unit 21 may determine a starting time of a work process based on a timing when the detection unit detects presence of a worker.
   In addition, for example, a worker may place a card showing an image (for example, a barcode indicating a worker identifier) at a predetermined position (hereafter called "the position of the card") in a range where imaging device 1 of a work area can capture the image provided when the worker starts his/her work process to inform the system of the start of the work process. In this case, for example, control unit 21 of terminal device 2 may analyze images of the work area including the position of the card captured by imaging device 1 at certain intervals to detect the card at the position of the card by checking, for example, whether a change in pixel values of the images at the position of the card exceeds a predetermined threshold. In this case, when control unit 21 detects the card at the position of the card, control unit 21 specifies a starting time of a work process based on the timing when the card is detected. Moreover, control unit 21 may decodes a barcode shown on the card to obtain data sets indicated by the barcode, and use the data sets as a part of work process data set.
(6) In the first embodiment described above, specifying unit 216 specifies a progress display area in accordance with a data set supplied from input unit 24 of terminal device 5. However, methods to specify a progress display area are not thus limited. For example, input unit 24 may include a touch panel, and specifying unit 216 may specify a progress display area in accordance with a data set output from the touch panel when a user operates the touch panel. In another example, a user may operate a mouse and a keyboard, and specifying unit 216 may specify a progress display area in accordance with data sets output from these operation input elements. In another example, terminal device 5 may include a detection unit for direction of eyes that tracks movement of pupils of a user via a camera and identifies a direction in which the eyes are looking, and specifying unit 216 may specify a progress display area in accordance with the detected direction. In other words, specifying unit 216 may be any one that specifies a progress display area displayed by display unit 25.
(7) In the present embodiments, imaging device 1 transmits captured images regardless of whether there is a worker at work area 100. However, for example, imaging device 1 may include a detection unit such as a heat detection sensor for detecting a worker, and imaging unit 1 may capture images only when a worker is detected by this detection unit and then transmit the image data sets. In this case, data quantity of captured images can be reduced because work area 100 is captured and an image data set representing the captured image is stored only when there is a worker at work area 100; i.e. work area 100 is not captured and no image data set is stored when there is not a worker at work area 100.
   In another example, imaging device 1 may capture work area 100 only when a certain device in the system (for example, terminal device 5) is turned on, and transmit image data sets. In this case, imaging device 1 may work only when the power of the certain device is on.
(8) In the embodiments described above, control unit 41 of production management database device 4 generates a progress data set in accordance with a work process data set and stores the progress data set in progress database DB6 when receiving the work process data set from terminal device 2. However, the work process data set received from terminal device 2 as it is may be stored as a progress data set. Specifically, for example, a work process data set as it is may be stored in progress database DB6 as a progress data set in a case when the work process data set transmitted from terminal device 2 includes a time data set indicating a starting time and a completion time of a work process.
(9) In the embodiments described above, imaging unit identifiers are stored in correspondence database DB7 in association with work process identifiers. However, the storage contents of correspondence database DB7 are not thus limited. For example, work area identifiers identifying work areas may be stored in association with imaging unit identifiers. In another example, imaging unit identifiers may be stored in association with work process identifiers and work area identifiers. In other words, data sets indicating a correspondence between at least any one of a work area and a work process, and an imaging unit may be stored. In a case when work area identifiers are stored in correspondence database DB7 in association with imaging unit identifiers, second control unit 217 of terminal device 5 may generate a search condition data set including a product identifier and a work area identifier that correspond to the area specified by specifying unit 216 and may send an inquiry to production management database device 4. In a case when one work area corresponds to one work process (i.e., in a case when a number of work processes performed at each work area is one), a work process identifier is to be associated with an imaging unit identifier by a work area identifier being associated with an imaging unit identifier, because a work process identifier is synonymous with a work area identifier.
(10) In the first embodiment described above, a worker identifier, a product identifier and a process identifier are input via barcode reader 241; however, means to input data sets such as a worker identifier and a product identifier are not thus limited, and other means may be used. For example, the data sets may be input by a user using a mouse and/or a keyboard, and the data sets may be input by use of speech recognition. In another example, radio-frequency identification reader that reads a radio-frequency tag may be used. In other words, input unit 24 may be any kinds of device that inputs a worker identifier and/or a product identifier.
   In addition, in the embodiments described above, terminal device 2 includes barcode reader 241. However, a device having an input unit such as a barcode reader may be provided as an external device of terminal device 2.
(11) In the first embodiment described above, Fig. 14 and Fig. 15 are exemplified as screens of display unit 25 of terminal device 5. Screens of display unit 25 are not thus limited, and other screens may be displayed. For example, control unit 21 of terminal device 5 may control display unit 25 to display plural images represented by image data sets in one group in plural display areas as shown in Fig. 24. Fig. 25 is a diagram for explaining images displayed on the screen shown in Fig. 24. In an example shown in Fig. 25, time data sets such as time sets T01, T02, T03, T04, T05, T06, ... are attached to image data sets. Second control unit 217 (i.e., control unit 21) of terminal device 2 causes a time lag between plural display areas regarding times selected as starting times for playback. Specifically, for example, second control unit 217 controls display unit 25 to display images in display area A41 from an image represented by an image data set corresponding to time data set T01 in chronological order, display images in display area A42 from an image represented by an image data set corresponding to time data set T03 in chronological order, and display images in display area A43 from an image represented by an image data set corresponding to time data set T05 in chronological order. In other words, second control unit 217 controls display unit 25 to display, in each of display areas, images represented by the received group of image data sets in accordance with time data sets attached to the image data sets, in chronological order. Moreover, in this case, second control unit 217 control display unit 25 to start to playback of a moving image represented by image data sets in each of the group with time lags between one display area and another display area.
   Specifically, for example, control unit 21 may control display unit 25 to display images, delaying the playback timing in display areas A41 to A49 by five minutes, or by ten minutes. Displaying in this way causes plural images captured at work area 100 at different timings in chronological order to be displayed by display unit 25 at the same time. Therefore, the worker can easily understand contents of a work process by viewing images displayed by display unit 25.
   In the examples shown in Fig. 24 and Fig. 25, the time lags of playback timings between display areas A41 and A42, between display areas A42 and A43, etc., may be uniform. In addition, the time lags in playback timings may be different between each pair of display areas. For example, as shown in Fig. 26, second control unit 217 may control display area 25 to display images in display area A41 from an image represented by an image data set corresponding to time data set T01 in chronological order, display images in display area A42 from an image represented by an image data set corresponding to time data set T04 in chronological order, and display images in display area A43 from an image represented by an image data set corresponding to time data set T05 in chronological order.
(12) In the first embodiment described above, in a case when there are plural image data sets corresponding to a progress display area specified by terminal device 5, control unit 41 of production management database device 4 may transmit the plural image data sets to terminal device 5 and control unit 21 of terminal device 5 may control display unit 25 to display images represented by the plural image data sets. In this case, specifying unit 414 of production management database device 4 specifies plural pairs of an imaging unit identifier and a time data set corresponding to a search condition data set received from terminal device 5, and transmits plural instruction data sets including the specified imaging unit identifier and the specified time data set to image database device 3. Image reading unit 313 of image database device 3 reads groups of image data sets, each group corresponding to each of the received instruction data sets, and transmits the groups of image data sets to terminal device 5 via production management database device 4. Control unit 21 of terminal device 5 receives the groups of image data sets, and displays them in accordance with the time data sets in chronological order in such a state that moving images represented by image data sets in the groups are comparable.
(13) Terminal device 5 in the first embodiment described above may include calculation unit 218 (shown by a dotted line in Fig. 9B) that calculates work time of a work process included in a search condition based on a capturing time data set corresponding to an image data set to be received. Specifically, a worker may input a starting time and a completion time of a work process using input unit 24 of terminal device 5 when he/she starts and completes his/her work process, and calculation unit 218 may calculate a difference between a timing indicated by a time data set attached to an image data set corresponding to the starting time of the work process and a timing indicated by a time data set attached to an image data set corresponding to the completion time of the work process, and may calculate work time by multiplying the calculated difference by a number of products relating to each work process. Calculation unit 218 may cause display unit 25 to display an image indicating a result of the calculation.
   Furthermore, in this embodiment, terminal device 5 may include multiplication unit 219 (shown by a dotted line in Fig. 9B) that calculates production costs of each work process in accordance with a predetermined algorithm using work time calculated by calculation unit 218. Specifically, for example, multiplication unit 219 may calculate production costs by multiplying work time calculated by calculation unit 218 by a predetermined unit cost. Multiplication unit 219 may cause display unit 25 to display an image representing a result of the multiplication. A user can compare work processes and/or can determine appropriate work time according to the result of the calculation of calculation unit 218 and/or multiplication unit 219.
   In addition, in this embodiment, terminal device 5 may include estimation unit 220 (shown by a dotted line in Fig. 9B) that estimates at least any one of a completion time and a shipment time of products by multiplying a number of residual products that should be produced by the calculated work time based on the work time calculated by calculation unit 218. Estimation unit 220 may cause display unit 25 to display an image representing a result of the estimation.
(14) In the embodiments described above, terminal device 5 or terminal device 6 may anticipate a remaining workload based on progress data sets. This embodiment will now be described. In this embodiment, control unit 21 of terminal device 5 and control unit 21 of terminal device 6 generate graphs that visualize progress of each work process as shown in Fig. 20 and control display unit 25 to display the graphs. In the example shown in Fig. 20, graphs that represent progress of work processes of "punching process," "bending process," "welding process," "painting process," "inspection process," and "shipment process" relative to a product are displayed. In the figure, horizontal axis represents dates and vertical axis represents work time (h). Solid lines G1 represent necessary work time per day for a received order in each work process. In other words, solid lines G1 indicate how much work is needed per day. On the other hand, solid lines G2 represent work time per day that was actually performed for each work process. For example, in "punching process" shown in Fig. 20, it is shown that a part of work planned to be completed by "April 12" has been already done, in a case that today is "March 12." Regions of differences between solid line G1 and solid line G2 represent amounts of remaining work processes (work processes that have not been completed). Control unit 21 generates solid line G1 in accordance with data representing the contents of an ordered work process, generates solid line G2 in accordance with progress data sets stored in progress database DB6, and controls display unit 25 to display them. A user can understand an amount of remaining work for each work process, dates when work orders are concentrated, and so on, and can anticipate completion date and/or shipment date of products by referring to screens displayed by display unit 25.
(15) In addition, in the embodiments described above, completed products may be confirmed. In this modification, control unit 21 generates a drawing of a completed product in which the contents of work processes, images of produced parts, and so on, are described when work processes are completed. Fig. 21 is a diagram showing an example of a drawing of a completed product. As shown in Fig. 21, image A71 shows dimensions of produced parts, and so on, and barcode (identifier information) A72 identifying a drawing is included in this drawing. Control unit 21 outputs this drawing on a paper using a device such as an externally coupled printer.
   A worker confirms whether produced parts conform to the dimensions using the drawing printed out, and puts a check in predetermined area A73 in the drawing. The worker generates an image data set by, for example, causing a scanner to read the checked drawing when the check is completed, and instructs it to register the generated image data set (hereinafter, referred to as "work completion data set") using input unit 24 of terminal device 5 or terminal device 6. Control unit 21 of terminal device 5 or terminal device 6 performs image recognition on a barcode image included in the specified work completion data set, specifies a progress data set corresponding to the work completion data set, and instructs production management database device 4 to associate the specified progress data set with the work completion data set. Production management database device 4 stores the progress data set and the work completion data set in association with each other in progress database DB6 in accordance with the instruction received from terminal device 5 or terminal device 6.
(16) In the embodiments described above, second control unit 217 of terminal device 5 may read plural groups of image data sets whose process identifiers are the same and whose worker identifiers are different. In this case, images of the same kinds of work processes performed by different workers are displayed by display unit 25 of terminal device 5. The worker can easily understand the contents of the work process by browsing the displayed screen.
   In the embodiments described above, imaging device 1 captures still images and transmits them to image database device 3. Captured images are not limited to still images, and may be moving images. Captured images may be any images that are associated with time data sets indicating starting times and/or completion times of work processes.
(17) In the second embodiment described above, first image database device 3A extracts a part of image data sets stored in image database DB1, and transmits the extracted image data sets to second image database device 3B. However, the image data sets that first image database device 3A transmits to second image database 3B are not limited to those shown in the embodiment described above. For example, first image database device 3A may lower a quantity of image data sets stored in image database DB1, and may transmit the image data sets with less data sizes than those of the original image data sets to second image database device 3B.
   According to the first embodiment and the second embodiment described above, a program executed by control unit 11 of imaging device 1, control unit 21 of terminal device 2, control unit 21 of terminal device 5, control unit 21 of terminal device 6, control unit 31 of image database device 3 or control unit 41 of production management database device 4 may be provided by being stored in a recording medium that can be read by a computer such as a magnetic recording medium such as a magnetic tape and a magnetic disk, an optical recording medium such as an optical disk, a magneto-optical medium, and a semiconductor memory. In addition, the program may be provided by being downloaded via a communication network such as the Internet. In addition, various kinds of devices as well as a CPU can be applied to the control unit that performs controls as described above; for example, a dedicated processor may be used.

## Claims

1. A work process management system comprising:
one or more transmission units each of which is provided for each of one or more work areas, transmits image data sets representing images of a work area captured by one or more imaging units, in association with capturing time data sets indicating capturing times of the images and imaging unit identifiers identifying the imaging units by which the images are captured, accepts an input of a work process data set including a work process identifier identifying a work process and a time data set indicating at least one of a starting time and a completion time of the work process, and transmits the work process data set;
an image storage unit that stores the image data sets in association with the capturing time data sets indicating capturing times and the imaging unit identifiers identifying the imaging units, which are transmitted by each of the one or more transmission units;
a first storage unit that stores data sets indicating correspondence relationships between work processes and imaging unit identifiers;
a second storage unit that stores, when the input of the work process data set of each of one or more work processes is accepted, a progress data set in accordance with the work process data set, the progress data set including the time data set indicating at least one of a starting time and a completion time of the work process;
a first control unit that controls a display device to display progress of the one or more work processes in one or more progress display areas in a predetermined layout, and controls the display device to update the display in the one or more progress display areas in accordance with contents stored in the second storage unit;
a specifying unit that specifies a progress display area from among the one or more progress display areas displayed by the display device; and
a second control unit that specifies one or more image data sets corresponding to the progress display area specified by the specifying unit by referring to contents stored in the second storage unit and in the first storage unit, retrieves the specified image data sets from an image database stored by the image storage unit, and displays images represented by the retrieved image data sets.

2. A work process management terminal comprising:
a first storage unit that stores data sets indicating correspondence relationships between work processes and imaging unit identifiers identifying imaging units, the imaging units capturing images of work areas;
a second storage unit that accepts an input of a work process data set of each of one or more work processes from one or more transmission units, and stores the work process data set, each of the one or more transmission units being provided for each of one or more work areas, transmitting image data sets representing images captured by one of the imaging units, in association with capturing time data sets indicating capturing times of the images and imaging unit identifiers identifying the imaging units by which the images are captured, accepting an input of work process data set, and transmitting the work process data set, the work process data set including a work process identifier identifying a work process and a time data set indicating at least one of a starting time and a completion time of the work process;
a first control unit that controls a display device to display progress of the one or more work processes in one or more progress display areas in a predetermined layout, and controls the display device to update the display of the one or more progress display areas in accordance with contents stored in the second storage unit;
a specifying unit that specifies a progress display area from among the one or more progress display areas displayed by the display device; and
a second control unit that specifies one or more image data sets corresponding to the progress display area specified by the specifying unit by referring to contents stored in the second storage unit and in the first storage unit, retrieves the specified image data sets from an image database stored by an image storage unit, and controls the display device to display images represented by the image data sets, the image storage unit storing the image data sets in association with the capturing time data sets indicating capturing times and the imaging unit identifiers identifying the imaging units, which are transmitted by the one or more transmission units.

3. The work process management terminal according to Claim 2, wherein
the second control unit retrieves from the image database plural image data sets representing images whose capturing times are successive in time series, and controls the display device to display images represented by the plural image data sets in plural display areas sequentially in time series based on the capturing time of the image data sets, so that starting times of displays of the images in the plural display areas are different from one another.

4. A program for causing a computer to execute:
a first storage step of storing data sets indicating correspondence relationships between work processes and imaging unit identifiers identifying imaging units, the imaging units capturing images of work areas;
a second storage step of accepting an input of a work process data set of each of one or more work processes from one or more transmission units, and storing the work process data set, each of the one or more transmission units being provided for each of one or more work areas, transmitting image data sets representing images captured by one of the imaging units, in association with capturing time data sets indicating capturing times of the images and imaging unit identifiers identifying the imaging units by which the images are captured, accepting an input of work process data set, and transmitting the work process data set, the work process data set including a work process identifier identifying a work process and a time data set indicating at least one of a starting time and a completion time of the work process;
a first control step of controlling a display device to display progress of the one or more work processes in one or more progress display areas in a predetermined layout, and controlling the display device to update the display of the one or more progress display areas in accordance with contents stored in the second storage unit;
a specifying step of specifying a progress display area from among the one or more progress display areas displayed by the display device; and
a second control step of specifying one or more image data sets corresponding to the progress display area specified in the specifying step by referring to contents stored in the second storage unit and in the first storage unit, retrieving the specified image data sets from an image database stored by an image storage unit, and controlling the display device to display images represented by the image data sets, the image storage unit storing the image data sets in association with the capturing time data sets indicating capturing times and the imaging unit identifiers identifying the imaging units, which are transmitted by the one or more transmission units.

5. The program according to Claim 4, causing the computer:
in the second control step, to retrieve from the image database plural image data sets representing images whose capturing times are successive in time series, and to control the display device to display images represented by the plural image data sets in plural display areas sequentially in time series based on the capturing time of the image data sets, so that starting times of displays of the images in the plural display areas are different from one another.

6. A work process management system comprising:
one or more image transmission units each of which is provided for each of one or more work areas, and each of which transmits image data sets representing images of a work area captured by one or more imaging units, in association with capturing time data sets indicating capturing times of the images and imaging unit identifiers identifying the imaging units by which the images are captured;
an image storage unit that stores the image data sets in association with the capturing time data sets indicating capturing times and the imaging unit identifiers identifying the imaging units, which are transmitted by each of the one or more image transmission units;
one or more work process information transmission units each of which accepts an input of a work process data set including a work process identifier identifying a work process and a time data set indicating at least one of a starting time and a completion time of the work process, and transmits the work process data set; and
a storage unit that stores, when the input of the work process data set of each of one or more work processes is accepted, a progress data set in accordance with the work process data set, the progress data set including the time data set indicating at least one of a starting time and a completion time of the work process.

7. A work process management method performed by a work process management system, the work process management system having a first storage unit and a second storage unit, the first storage unit storing data sets indicating correspondence relationships between imaging unit identifiers identifying imaging units, each of which is provided for each of work areas and captures images of the work area, and work processes, comprising:
a transmission step of transmitting image data sets representing images captured by one or more imaging units in association with capturing time data sets indicating capturing times of the images and imaging unit identifiers identifying the imaging units by which the images are captured, accepting an input of a work process data set including a work process identifier identifying a work process and a time data set indicating at least one of a starting time and a completion time of the work process;
an image storing step of storing the image data sets in an image storage unit in association with the capturing time data sets indicating capturing times and the imaging unit identifiers identifying the imaging units, which are transmitted in the transmission step;
a storing step of storing, when the input of the work process data set of each of one or more work processes is accepted, a progress data set in accordance with the work process data set in the second storage unit, the progress data set including the time data set indicating at least one of a starting time and a completion time of the work process;
a first control step of controlling a display device to display progress of the one or more work processes in one or more progress display areas in a predetermined layout, and controlling the display device to update the display in the one or more progress display areas in accordance with contents stored in the second storage unit;
a specifying step of specifying a progress display area from among the one or more progress display areas displayed by the display device; and
a second control step of specifying one or more image data sets corresponding to the progress display area specified in the specifying step by referring to contents stored in the second storage unit and in a first storage unit, retrieves the specified image data sets from an image database stored by the image storage unit, and displays images represented by the retrieved image data sets.

8. A work process management method comprising:
an image transmission step of transmitting image data sets representing images of a work area captured by one or more imaging units provided for each of plural work areas, in association with capturing time data sets indicating capturing times of the images and imaging unit identifiers identifying the imaging units by which the images are captured;
an image storage step of storing the image data sets in an image storage unit in association with the capturing time data sets indicating capturing times and the imaging unit identifiers identifying the imaging units, which are transmitted in the image transmission step;
a work process information transmission step of accepting an input of a work process data set including a work process identifier identifying a work process and a time data set indicating at least one of a starting time and a completion time of the work process, and transmitting the work process data set; and
a storage step of storing in a storage unit, when the input of the work process data set of each of one or more work processes is accepted, a progress data set in accordance with the work process data set, the progress data set including the time data set indicating at least one of a starting time and a completion time of the work process.
